# EUROPÄISCHE PATENTSCHRIFT

(11) **EP 3 894 798 B1**
(45) Veröffentlichungstag und Bekanntmachung des Hinweises auf die Patenterteilung: **04.01.2023**
(21) Anmeldenummer: 19805222.7
(22) Anmeldetag: 13.11.2019
(51) Int. Cl.: G01F 1/32, G01F 1/325

(54) **MESSSYSTEM ZUM MESSEN EINES STRÖMUNGSPARAMETERS EINES IN EINER ROHRLEITUNG STRÖMENDEN FLUIDS**
MEASUREMENT SYSTEM FOR MEASURING A PARAMETER OF A FLUID IN A PIPE
SYSTÈME DE MESURE POUR MESURER UN PARAMÈTRE D'UN FLUIDE DANS UN TUYAU

(30) Priorität: 14.12.2018 DE 102018132311
(43) Veröffentlichungstag der Anmeldung: 20.10.2021
(73) Patentinhaber: Endress + Hauser Flowtec AG, 4153 Reinach (CH)
(72) Erfinder: HOLLMACH, Marc, 4056 Basel (CH); WAGNER, Michel, 4127 Birsfelden (CH); HÖCKER, Rainer, 79761 Waldshut (DE)
(74) Vertreter: Hahn, Christian
(86) Internationale Anmeldenummer: PCT/EP2019/081208
(87) Internationale Veröffentlichungsnummer: WO 2020/120060

(56) Entgegenhaltungen:
- CN-B- 101 226 070
- DE-A1- 3 836 488
- DE-A1-102009 001 526
- JP-A- H0 579 870
- JP-A- H01 113 617
- US-A- 5 869 772
- US-A1- 2005 230 973

## Beschreibung

Die Erfindung betrifft ein Meßsystem zum Messen wenigstens eines Strömungsparameters eines in einer Rohrleitung strömenden Fluids.

In der Prozeßmeß- und Automatisierungstechnik werden für die Messung von Strömungsgeschwindigkeiten von in Rohrleitungen strömenden Fluiden, insb. schnellströmenden und/oder heißen Gasen und/oder Fluidströmen von hoher Reynoldszahl, bzw. von mit einer jeweiligen Strömungsgeschwindigkeit korrespondierenden Strömungsparametern, wie z.B. Volumen- oder Massenströmen bzw. totalisierte Volumen- oder Massen-Durchflüsse, oftmals als Vortex-Durchflußmeßgeräte ausgebildete Meßsysteme verwendet. Beispiele für solche Meßsysteme sind u.a. aus der EP-A 666 467, der US-A 2006/0230841, der US-A 2008/0072686, der US-A 2011/0154913, der US-A 2011/0247430, der US-A 2017/0284841, der US-A 60 03 384, der US-A 61 01 885, der US-B 63 52 000, der US-B 69 10 387, der US-B 69 38 496, der US-B 80 10 312, der US-B 82 00 450, der US-B 83 70 098, der US-B 84 47 536, der WO-A 98/43051 oder der WO-A 2017/153124 bekannt und werden u.a. auch von der Anmelderin selbst angeboten, beispielsweise unter der Warenbezeichnung "PROWIRL D 200", "PROWIRL F 200", "PROWIRL O 200", "PROWIRL R 200".

Die gezeigten Meßsysteme weisen jeweils einen in das Lumen der jeweiligen, beispielsweise nämlich als Anlagenkomponente eines Wärmeversorgungsnetzes oder eines Turbinenkreislaufes ausgebildeten, Rohrleitung bzw. in ein Lumen eines in den Verlauf nämlicher Rohrleitung eingesetzten Meßrohrs hineinragenden, mithin vom Fluid, beispielsweise einem (Heiß-)Dampf, angeströmten Staukörper zum Erzeugen von zu einer sogenannten Kármánschen Wirbelstrasse aufgereihten Wirbeln innerhalb des unmittelbar stromabwärts des Staukörpers strömenden Teilvolumens des Fluidstroms auf. Die Wirbel werden dabei bekanntlich mit einer von der Strömungsgeschwindigkeit des in einer Hauptströmungsrichtung durch das Meßrohr strömenden Fluids abhängigen Ablösefrequenz (f_{V}) am Staukörper generiert, die - mit der Strouhal-Zahl (Sr ~ f_{V} / u) als Proportionalitätsfaktor - zumindest für hohe Reynolds-Zahlen (Re) von über 20000 proportional zur Strömungsgeschwindigkeit (u) des am Staukörper vorbei strömenden Fluids ist. Ferner weisen die Meßsysteme einen im Bereich der Karman'schen Wirbelstraße in die Strömung, mithin in Lumen der hineinragenden, beispielsweise stromabwärts des Staukörpers positionierten bzw. darin integrierten, Wirbelsensor auf. Nämlicher Wirbelsensor dient im besonderen dazu, Druckschwankungen in der im strömenden Fluid ausgebildeten Kärmänschen Wirbelstraße zu erfassen und in ein die Druckschwankungen repräsentierendes - beispielsweise elektrisches oder optisches - Wirbelsensorsignal zu wandeln, das mit einem innerhalb des Fluids herrschenden, infolge gegenläufiger Wirbel stromab des - typischerweise prismatischen oder zylindrischen - Staukörpers periodischen Schwankungen unterworfenen Druck korrespondiert, derart, daß das Wirbelsensorsignal eine Nutzkomponente, nämlich eine die Ablösefrequenz repräsentierende, gleichwohl signifikant vom Signalrauschen abweichende Amplitude aufweisende spektrale Signalkomponente enthält.

Bei dem in der US-B 63 52 000, der US-A 2006/0230841 oder der US-A 2017/0284841 jeweils gezeigten Meßsystem weist der Wirbelsensor einen mittels eines - zumeist als dünne und im wesentlichen flachen Membran ausgebildeten - Verformungskörper sowie einer sich ausgehend von einer im wesentlichen planaren Oberfläche nämlichen Verformungskörpers erstreckenden - zumeist plattenförmigen bzw. keilförmigen - Sensorfahne gebildete Sensorbaugruppe auf, die dafür eingerichtet ist, in einer quer zur eigentlichen Hauptströmungsrichtung verlaufenden Detektionsrichtung wirkende Druckschwankungen in der Kärmänschen Wirbelstrasse zu erfassen, nämlich in mit den Druckschwankungen korrespondierende Bewegungen des Verformungskörpers zu wandeln, derart, daß die Sensorfahne infolge der Druckschwankungen den Verformungskörper elastisch verformende Pendelbewegungen in Detektionsrichtung ausführt, wodurch Verformungskörper und Sensorfahne zu erzwungenen, gleichwohl außer Resonanz - typischerweise nämlich unterhalb einer niedrigsten mechanische Resonanzfrequenz des Wirbelsensors - liegenden Schwingungen um eine gemeinsame statischen Ruhelage angeregt werden. Der Verformungskörper weist ferner ein - zumeist kreisringförmiges - äußeres Randsegment auf, das dafür eingerichtet ist, mit einer dem Haltern des Verformungskörper bzw. des damit gebildeten Sensors an einer Wandung eines Rohrs dienenden Fassung hermetisch dicht, beispielsweise nämlich stoffschlüssige, verbunden zu werden, derart, daß der Verformungskörper eine in der Wandung des Rohrs vorgesehene Öffnung überdeckt bzw. hermetisch verschließt und daß die die Sensorfahne tragende Oberfläche des Verformungskörpers dem Fluid führenden Lumen des Meßrohrs bzw. der Rohrleitung zugewandt ist, mithin die Sensorfahne in nämliches Lumen hineinragt. Zwecks des Generierens des Wirbelsensorsignals umfaßt der Wirbelsensor ferner ein entsprechendes, beispielsweise nämlich mittels eines mit der Sensorbaugruppe mechanisch gekoppelten bzw. darin integrierten Kondensator oder mittels eines als piezoelektrischer Wandler dienenden Piezostapel gebildetes, Wandlerelement, das dafür eingerichtet ist, Bewegungen des Verformungskörpers, nicht zuletzt auch mit Druckschwankungen korrespondierende Bewegungen des Verformungskörpers, bzw. des ggf. vorhandenen Ausgleichskörper zu erfassen und einem elektrischen oder optischen Trägersignal aufzumodulieren. Wie u.a. in der US-B 63 52 000 oder US-A 2017/0284841 jeweils gezeigt, kann die Sensorbaugruppen bzw. der damit gebildet Wirbelsensor zudem einen sich ausgehend von einer der die Sensorfahne tragende Oberfläche abgewandten Oberfläche des Verformungskörpers erstreckenden, zumeist stab-, platten- oder hülsenförmig ausgebildeten Ausgleichskörper aufweisen, der im besonderen dazu dient, aus Bewegungen der Sensorbaugruppe resultierenden Kräften bzw. Momenten, beispielsweise infolge von Vibrationen der Rohrleitung, zu kompensieren bzw. daraus resultierende unerwünschte Bewegungen der Sensorfahne zu vermeiden.

Der Wirbelsensor ist auf einer dem Fluid führenden Lumen abgewandten Seite ferner mit einer - typischerweise druck- und schlagfest gekapselten, ggf. auch nach außen hin hermetisch abgedichteten - Umformer-Elektronik verbunden. Die Umformer-Elektronik weist eine entsprechende, mit dem Wirbelsensor bzw. dessen Wandlerelement via Anschlußleitungen, ggf. unter Zwischenschaltung elektrischer Barrieren und/oder galvanischer Trennstellen, elektrisch verbundene digitale Meßschaltung zum Verarbeiten bzw. Auswerten des Wirbelsensorsignals und zum Erzeugen von digitalen Meßwerten für den jeweils zu erfassende Strömungsparameter, beispielsweise nämlich die Strömungsgeschwindigkeit, der Volumenstrom und/oder der Massenstrom, auf. Im besonderen ist die Umformer-Elektronik dafür eingerichtet anhand des wenigstens einen Wirbelsensorsignals die Ablösefrequenz repräsentierende digitale Wirbelfrequenz-Meßwerte zu ermitteln sowie unter Verwendung eines oder mehrerer Wirbelfrequenz-Meßwerte Meßwerte für den wenigstens einen Strömungsparameter zu berechnen und auszugeben, beispielsweise an eine entsprechend im Meßsystem vorgesehenes Anzeigeelement. Wie u.a. auch in den eingangs erwähnten US-B 69 38 496, US-B 69 10 387, US-B 80 10 312, US-B 82 00 450, US-B 83 70 098 oder US-B 84 47 536 gezeigt, können Meßsysteme der in Rede stehenden Art desweiteren einen, beispielsweise stromabwärts des Staukörpers oder darin angeordneten, Temperatursensor und/oder einen, beispielsweise stromabwärts des Staukörpers oder darin angeordneten, Drucksensor aufweisen und kann die Umformer-Elektronik zudem eingerichtet sein, Meßwerte für den wenigstens einen Strömungsparameter auch unter Verwendung eines vom Temperatursensor bereitgestellten Temperatursensorsignals bzw. unter Verwendung eines vom Drucksensor bereitgestellten Drucksensorsignals zu berechnen. Die üblicherweise in einem Schutz-Gehäuse aus Metall und/oder schlagfestem Kunststoff untergebrachte Umformer-Elektronik industrietauglicher bzw. in der industriellen Meßtechnik etablierter Meßsysteme stellen zudem zumeist auch einem Industriestandard, beispielsweise der DIN IEC 60381-1, konforme externe Schnittstellen für die Kommunikation mit übergeordneten, beispielsweise mittels Speicherprogrammierten Steuerungen (SPS) gebildete, Meß- und/oder Reglersysteme bereit. Ein solche externe Schnittstelle kann beispielsweise als in eine Stromschleife eingliederbarer Zweileiter-Anschluß ausgebildete und/oder mit etablierten industriellen Feldbussen kompatible ausgebildet sein.

Untersuchungen an u.a. auch in Dampfanwendungen verwendeten Meßsystemen der in Rede stehenden Art haben ergeben, daß bei deren Verwendung zur Messung von totalisierten Volumen- bzw. Massenströmen gelegentlich übererhöhte, nämlich weit über eine Spezifikation des jeweiligen Meßsystems hinausgehende Meßfehler auftreten können. Weitergehend hat sich gezeigt, daß besonders hohe Meßfehler beispielsweise während des Anfahrens der jeweiligen Anlage zu verzeichnen sind, derart, daß der dafür jeweils gemessene totalisierte Volumen- bzw. Massenstrom im Vergleich zum tatsächlichen Volumen- bzw. Massenstrom deutlich zu gering veranschlagt worden ist; dies nicht zuletzt deshalb, weil bei sehr hoher Strömungsgeschwindigkeit gelegentlich fehlerhafte, insb. nämlich fälschlicherweise mit Null veranschlagte, Meßwerte für die Ablösefrequenz ermittelt und für die Messung des totalisierten Volumen- bzw. Massenstroms verwendet worden sind.

Die JP H05 79870 A spezifiziert ein Messsystem mit einem Staukörper zur Erzeugung einer Kármánschen Wirbelstrasse gemäß dem Stand der Technik, bei dem im Wirbelsensorsignal zwei Nutzkomponenten erkannt werden, nämlich eine die Ablösefrequenz der Kármánschen Wirbelstrasse repräsentierende Signalkomponente und eine die mechanische Resonanzfrequenz des Wirbelsensors repräsentierende Signalkomponente.

Ausgehend vom vorbezeichneten Stand der Technik besteht eine Aufgabe der Erfindung darin, Meßsysteme der vorbezeichneten Art dahingehend zu verbessern, daß Meßfehler bei sehr hoher Strömungsgeschwindigkeit vermieden werden können und/oder daß das Vorliegen einer zu hohen, nämlich außerhalb eines spezifizierten Meßbereichs liegenden Strömungsgeschwindigkeit zumindest detektiert werden kann.

Zur Lösung der Aufgabe besteht die Erfindung in einem Meßsystem zum Messen wenigstens eines, beispielweise zeitlich veränderlichen, Strömungsparameters, beispielweise einer Strömungsgeschwindigkeit und/oder einer Volumenstrom und/oder einer Massenstrom, eines in einer Rohrleitung strömenden Fluids, beispielweise nämlich eines Gases oder eines Aerosols, welches Meßsystem umfaßt:
- ein in den Verlauf nämlicher Rohrleitung einsetzbares Rohr mit einem Lumen, das dafür eingerichtet ist, das in der Rohrleitung strömende Fluid zu führen bzw. von nämlichem Fluid durchströmt zu werden;
- einen im Lumen des Rohrs angeordneten, beispielweise prismatischen oder zylindrischen, Stauköper, der dafür eingerichtet ist, im daran vorbei strömenden Fluid Wirbel mit einer von einer momentanen Strömungsgeschwindigkeit, u, nämlichen Fluids abhängigen Ablösefrequenz zu generieren, derart, daß im stromabwärts des Staukörpers strömenden Fluid eine Kärmänsche Wirbelstrasse ausgebildet ist;
- einen, beispielweise stromabwärts des Staukörpers angeordneten oder darin integrierten, Wirbelsensor,
- der wenigstens eine, beispielweise niedrigste und/oder stets oberhalb der Ablösefrequenz liegende, mechanische Resonanzfrequenz aufweist
- und der eingerichtet ist, wenigstens ein, beispielweise elektrisches oder optisches, sich zeitlich änderndes Wirbelsensorsignal bereitzustellen, das eine erste Nutzkomponente, nämlich eine die Ablösefrequenz repräsentierende - beispielweise eine nicht unter einem dafür vorgegebenen Schwellenwert für Signalrauschen liegenden Signalpegel aufweisende - erste spektrale Signalkomponente enthält, falls im stromabwärts des Staukörpers strömenden Fluid eine Kärmänsche Wirbelstrasse ausgebildet ist, und das eine zweite Nutzkomponente, nämlich eine die wenigstens eine mechanische Resonanzfrequenz des Wirbelsensors repräsentierende - beispielweise eine nicht unter einem dafür vorgegebenen Schwellenwert für Signalrauschen liegenden Signalpegel aufweisende - zweite spektrale Signalkomponente enthält, falls Fluid am Wirbelsensor vorbeiströmt;
- sowie eine, beispielweise mittels wenigstens eines Mikroprozessors gebildete, Umformer-Elektronik zum Auswerten des wenigstens einen Wirbelsensorsignals und zum Ermitteln von, beispielweise digitalen, Meßwerten für den wenigstens einen Strömungsparameter;
   wobei die Umformer-Elektronik eingerichtet ist, das wenigstens eine Wirbelsensorsignal zu empfangen und zu ermitteln, ob die die erste Nutzkomponente und/oder die zweite Nutzkomponente im wenigstens einen Wirbelsensorsignal enthalten ist;
   wobei die Umformer-Elektronik eingerichtet ist, für den Fall, daß die erste Nutzkomponente im wenigstens einen Wirbelsensorsignal enthalten ist, sowohl anhand der ersten Nutzkomponente des wenigstens einen Wirbelsensorsignals die Ablösefrequenz repräsentierende, beispielweise digitale, Wirbelfrequenz-Meßwerte zu ermitteln als auch Strömungsparameter-Meßwerte erster Art, nämlich unter Verwendung eines oder mehrerer Wirbelfrequenz-Meßwerte berechnete, beispielweise digitale, Meßwertefür den wenigstens einen Strömungsparameter bereitzustellen;
   und wobei die Umformer-Elektronik eingerichtet ist, für den Fall, daß die erste Nutzkomponente im wenigstens einen Wirbelsensorsignal nicht enthalten bzw. nicht ermittelt ist, zugleich die zweite Nutzkomponente im wenigstens einen Wirbelsensorsignal aber enthalten bzw. ermittelt ist, keine Strömungsparameter-Meßwerten erster Art bereitzustellen und/oder ein eine Ausgabe von Strömungsparameter-Meßwerten erster Art unterbindendes Steuerkommando zu generieren und/oder eine Meldung zu generieren, beispielweise nämlich auszugeben, die signalisiert, daß die momentane Strömungsgeschwindigkeit des am Staukörper vorbei strömenden Fluids nicht kleiner ist als eine momentane Schallgeschwindigkeit, nämlichen Fluids, beispielweise nämlich, daß die momentane Strömungsgeschwindigkeit des am Staukörper vorbei strömenden Fluids gleich dessen momentaner Schallgeschwindigkeit ist, mithin einer Mach-Zahl von Eins entspricht.

Nach einer ersten Ausgestaltung der Erfindung ist ferner vorgesehen, daß die Umformer-Elektronik eingerichtet ist, für den Fall, daß die erste Nutzkomponente im wenigstens einen Wirbelsensorsignal enthalten ist, ein eine Ausgabe von Strömungsparameter-Meßwerten erster Art veranlassendes Steuerkommando zu generieren.

Nach einer zweiten Ausgestaltung der Erfindung ist ferner vorgesehen, daß die Umformer-Elektronik ein erstes Signalfilter aufweist, das dafür eingerichtet ist, an einem Signaleingang das Wirbelsensorsignal zu empfangen und an einem Filterausgang ein die erste Nutzkomponente des Wirbelsensorsignals enthaltendes, beispielweise nämlich die zweite Nutzkomponente stets nur abgeschwächt oder nicht enthaltendes, erstes, beispielweise digitales, Nutzsignal bereitzustellen.

Nach einer dritten Ausgestaltung der Erfindung ist ferner vorgesehen, daß die Umformer-Elektronik ein zweites Signalfilter aufweist, das dafür eingerichtet ist, an einem Signaleingang das Wirbelsensorsignal zu empfangen und an einem Filterausgang ein die zweite Nutzkomponente des Wirbelsensorsignals enthaltendes, beispielweise nämlich die erste Nutzkomponente stets nur abgeschwächt oder nicht enthaltendes, zweites, beispielweise digitales, Nutzsignal bereitzustellen. Diese Ausgestaltung der Erfindung weiterbildend ist die Umformer-Elektronik ferner eingerichtet, unter Verwendung des ersten Nutzsignals zu ermitteln, ob die die erste Nutzkomponente im wenigstens einen Wirbelsensorsignal enthalten ist, und/oder unter Verwendung des zweiten Nutzsignals zu ermitteln, ob die die zweite Nutzkomponente im wenigstens einen Wirbelsensorsignal enthalten ist.

Nach einer vierten Ausgestaltung der Erfindung ist die Umformer-Elektronik eingerichtet, sowohl eine diskrete Fourier-Transformation (DFT) des wenigstens einen Wirbelsensorsignals zu generieren als auch basierend auf nämlicher diskreter Fourier-Transformation des wenigstens einen Wirbelsensorsignals zu ermitteln, ob die die erste Nutzkomponente und/oder die zweite Nutzkomponente im wenigstens einen Wirbelsensorsignal enthalten ist.

Nach einer fünften Ausgestaltung der Erfindung ist die Umformer-Elektronik ferner eingerichtet, sowohl eine Autokorrelation (AKF) des wenigstens einen Wirbelsensorsignals zu berechnen als auch basierend auf nämlicher Autokorrelation (AKF) des wenigstens einen Wirbelsensorsignals zu ermitteln, ob die die erste Nutzkomponente und/oder die zweite Nutzkomponente im wenigstens einen Wirbelsensorsignal enthalten ist.

Nach einer sechsten Ausgestaltung der Erfindung ist ferner vorgesehen, daß die Umformer-Elektronik wenigstens eine Wandlerschaltung aufweist, die eingerichtet ist, das wenigstens eine Wirbelsensorsignal zu empfangen und zu digitalisieren, beispielweise nämlich in ein digitales Wirbelsensorsignal zu wandeln und nämliches digitales Wirbelsensorsignal an einem Digitalausgang der Wandlerschaltung bereitzustellen.

Nach einer siebenten Ausgestaltung der Erfindung ist ferner vorgesehen, daß die Umformer-Elektronik eingerichtet ist, die Strömungsparameter-Meßwerte erster Art auch unter Verwendung einer Strouhal-Zahl, nämlich einer ein Verhältnis der Ablösefrequenz zur Strömungsgeschwindigkeit des am Staukörper vorbei strömenden Fluids repräsentierenden Kennzahl zu berechnen.

Nach einer achten Ausgestaltung der Erfindung ist ferner vorgesehen, daß die Umformer-Elektronik eingerichtet ist, für den Fall, daß im wenigstens einen Wirbelsensorsignal weder die erste Nutzkomponente noch die zweite Nutzkomponente ermittelt ist, eine Meldung zu generieren, beispielweise nämlich auszugeben, die signalisiert, daß momentan kein Fluid durch das Rohr hindurchströmt.

Nach einer neunten Ausgestaltung der Erfindung ist ferner vorgesehen, daß der Wirbelsensor einen, beispielweise membranartigen und/oder scheibenförmigen, Verformungskörper mit einer dem Lumen zugewandten ersten Oberfläche und einer gegenüberliegenden, beispielweise zur ersten Oberfläche zumindest teilweise parallelen, zweiten Oberfläche aufweist, und daß der Wirbelsensor wenigstens ein oberhalb und/oder auf der zweiten Oberfläche des Verformungskörper angeordnetes, beispielweise nämlich am Verformungskörper angebrachtes und/oder in dessen Nähe positioniertes, Wandlerelement aufweist, das dafür eingerichtet ist, Bewegungen des Verformungskörpers, beispielweise von dessen zweiter Oberfläche, zu erfassen und in das Wirbelsensorsignal zu wandeln. Diese Ausgestaltung weiterbildend ist ferner vorgesehen, daß der Wirbelsensor eine sich ausgehend von der ersten Oberfläche des Verformungskörpers bis zu einem distalen Ende erstreckende, beispielweise plattenförmige oder keilförmige, Sensorfahne aufweist.

Nach einer zehnten Ausgestaltung der Erfindung ist ferner vorgesehen, daß das Fluid gasförmig, beispielweise nämlich Wasserdampf, Erdgas oder Biogas ist.

Nach einer ersten Weiterbildung der Erfindung umfaßt das Meßsystem weiters: ein mit der Umformer-Elektronik gekoppeltes Anzeigeelement zur Ausgabe von von der Umformer-Elektronik bereitgestellten Meßwerten für den wenigstens einen Strömungsparameter und/oder von mittels der Umformer-Elektronik generierten Meldungen.

Nach einer zweiten Weiterbildung der Erfindung umfaßt das Meßsystem weiters: einen, beispielsweise stromabwärts des Staukörpers, Drucksensor, der eingerichtet ist, wenigstens ein Drucksensorsignal bereitzustellen, das einer Änderung eines, insb. statischen, Drucks des strömenden Fluids mit einer Änderung wenigstens eines Signalparameters folgt; wobei die Umformer-Elektronik eingerichtet ist, das wenigstens eine Drucksensorsignal zu empfangen, und wobei die Umformer-Elektronik eingerichtet ist, anhand des wenigstens einen Drucksensorsignals nämlichen Druck des Fluids repräsentierende Druck-Meßwerte zu ermitteln.

Nach einer dritten Weiterbildung der Erfindung umfaßt das Meßsystem weiters: einen, insb. stromabwärts des Staukörpers oder darin angeordneten, Temperatursensor, der eingerichtet ist, wenigstens ein Temperatursensorsignal bereitzustellen, das einer Änderung einer Temperatur des strömenden Fluids mit einer Änderung wenigstens eines Signalparameters folgt, wobei die Umformer-Elektronik eingerichtet ist, das wenigstens eine Temperatursensorsignal zu empfangen, und wobei die Umformer-Elektronik eingerichtet ist, anhand des wenigstens einen Temperatursensorsignals nämliche Temperatur des Fluids repräsentierende Temperatur-Meßwerte zu ermitteln.

Nach einer ersten Ausgestaltung der dritten Weiterbildung der Erfindung ist ferner vorgesehen, daß die Umformer-Elektronik eingerichtet ist, unter Verwendung sowohl des wenigstens einen Wirbelsensorsignals als auch des wenigstens einen Temperatursensorsignals eine Schallgeschwindigkeit des am Staukörper vorbei strömenden Fluids zu ermitteln, insb. nämliche Schallgeschwindigkeit repräsentierende Schallgeschwindigkeit-Meßwerte zu berechnen.

Nach einer zweiten Ausgestaltung der dritten Weiterbildung der Erfindung ist ferner vorgesehen, daß die Umformer-Elektronik eingerichtet ist, unter Verwendung des wenigstens einen Wirbelsensorsignals, beispielsweise unter Verwendung sowohl des wenigstens einen Wirbelsensorsignals als auch des Temperatursensorsignals, eine Mach-Zahl für das am Staukörper vorbei strömende Fluids zu ermitteln, insb. nämliche Mach-Zahl repräsentierende Machzahl-Meßwerte zu berechnen. Diese Ausgestaltung der Erfindung weiterbildend ist die Umformer-Elektronik ferner eingerichtet, für den Fall, daß die zweite Nutzkomponente im wenigstens einen Wirbelsensorsignal enthalten und zugleich die erste Nutzkomponente im wenigstens einen Wirbelsensorsignal nicht enthalten bzw. nicht ermittelt ist, den Machzahl-Meßwert auf einen vorgegebenen Festwert, beispielsweise nämlich auf Eins, zu setzen bzw. nämlichen vorgegebenen Festwert als Machzahl-Meßwert auszugeben.

Nach einer vierten Weiterbildung der Erfindung umfaßt das Meßsystem weiters: einen, beispielsweise stromabwärts des Staukörpers oder darin angeordneten, Temperatursensor, der eingerichtet ist, wenigstens ein Temperatursensorsignal bereitzustellen, das einer Änderung einer Temperatur des strömenden Fluids mit einer Änderung wenigstens eines Signalparameters folgt, wobei die Umformer-Elektronik ferner eingerichtet ist, das wenigstens eine Temperatursensorsignal zu empfangen, und wobei die Umformer-Elektronik eingerichtet ist, sowohl anhand des wenigstens einen Temperatursensorsignals nämliche Temperatur des Fluids repräsentierende Temperatur-Meßwerte zu ermitteln als Strömungsparameter-Meßwerte zweiter Art, nämlich unter Verwendung eines oder mehrerer Temperatur-Meßwerte, gleichwohl ohne Verwendung eines Wirbelfrequenz-Meßwerts berechnete Meßwerte für den wenigstens einen Strömungsparameter bereitzustellen.

Nach einer ersten Ausgestaltung der vierten Weiterbildung der Erfindung ist ferner vorgesehen, daß die Umformer-Elektronik eingerichtet ist, für den Fall, daß die zweite Nutzkomponente im wenigstens einen Wirbelsensorsignal enthalten und zugleich die erste Nutzkomponente im wenigstens einen Wirbelsensorsignal nicht enthalten bzw. nicht ermittelt ist, ein eine Ausgabe von Strömungsparameter-Meßwerten zweiter Art veranlassendes Steuerkommando zu generieren.

Nach einer zweiten Ausgestaltung der vierten Weiterbildung der Erfindung ist ferner vorgesehen, daß die Umformer-Elektronik eingerichtet ist, für den Fall, daß die erste Nutzkomponente im wenigstens einen Wirbelsensorsignal enthalten ist, ein eine Ausgabe von Strömungsparameter-Meßwerten zweiter Art unterbindendes Steuerkommando zu generieren.

Nach einer dritten Ausgestaltung der vierten Weiterbildung der Erfindung ist ferner vorgesehen, daß die Umformer-Elektronik eingerichtet ist, für den Fall, daß die zweite Nutzkomponente im wenigstens einen Wirbelsensorsignal enthalten und zugleich die erste Nutzkomponente im wenigstens einen Wirbelsensorsignal nicht enthalten bzw. nicht ermittelt ist, Strömungsparameter-Meßwerte zweiter Art auszugeben.

Nach einer vierten Ausgestaltung der vierten Weiterbildung der Erfindung ist ferner vorgesehen, daß die Umformer-Elektronik eingerichtet ist, für den Fall, daß die zweite Nutzkomponente im wenigstens einen Wirbelsensorsignal enthalten und zugleich die erste Nutzkomponente im wenigstens einen Wirbelsensorsignal nicht enthalten bzw. nicht ermittelt ist, eine anhand der Temperatur berechnete Äquivalenzfrequenz, nämlich eine der Schallgeschwindigkeit entsprechende Frequenz zum Ermitteln von Meßwerten für den wenigstens einen Strömungsparameter zu verwenden.

Nach einer fünften Ausgestaltung der vierten Weiterbildung der Erfindung ist ferner vorgesehen, daß die Umformer-Elektronik eingerichtet ist, für den Fall, daß die erste Nutzkomponente im wenigstens einen Wirbelsensorsignal enthalten ist, keine Strömungsparameter-Meßwerte zweiter Art auszugeben.

Nach einer sechsten Ausgestaltung der vierten Weiterbildung der Erfindung ist ferner vorgesehen, daß die Umformer-Elektronik eingerichtet ist, zumindest die Strömungsparameter-Meßwerte zweiter Art auch unter Verwendung eines Isentropenexponent nämlich einer ein Verhältnis einer Wärmekapazität des Fluids bei konstantem Druck zur einer Wärmekapazität des Fluids bei konstantem Volumen repräsentierenden Kennzahl zu berechnen.

Nach einer siebenten Ausgestaltung der vierten Weiterbildung der Erfindung ist ferner vorgesehen, daß die Umformer-Elektronik eingerichtet ist, unter Verwendung sowohl des wenigstens einen Wirbelsensorsignals als auch des wenigstens einen Temperatursensorsignals die Schallgeschwindigkeit des am Staukörper vorbei strömenden Fluids zu ermitteln, insb. nämliche Schallgeschwindigkeit repräsentierende Schallgeschwindigkeit-Meßwerte zu berechnen, und ist ferner vorgesehen, daß die Umformer-Elektronik eingerichtet ist, zumindest die Strömungsparameter-Meßwerte zweiter Art auch unter Verwendung eines oder mehrerer Schallgeschwindigkeit-Meßwerte zu berechnen, beispielsweise nämlich Schallgeschwindigkeit-Meßwerte als Strömungsparameter-Meßwerte zweiter Art auszugeben.

Nach einer achten Ausgestaltung der vierten Weiterbildung der Erfindung ist ferner vorgesehen, daß die Umformer-Elektronik eingerichtet ist, unter Verwendung des wenigstens einen Wirbelsensorsignals, insb. unter Verwendung sowohl des wenigstens einen Wirbelsensorsignals als auch des Temperatursensorsignals, eine Mach-Zahl für das am Staukörper vorbei strömende Fluids zu ermitteln, beispielsweise nämliche Mach-Zahl repräsentierende Machzahl-Meßwerte zu berechnen, und ist ferner vorgesehen, daß die Umformer-Elektronik eingerichtet ist, zumindest die Strömungsparameter-Meßwerte zweiter Art auch unter Verwendung eines oder mehrerer Machzahl-Meßwerte, beispielsweise auch unter Verwendung eines oder mehrerer Druck-Meßwerte, zu berechnen.

Nach einer neunten Ausgestaltung der vierten Weiterbildung der Erfindung ist ferner vorgesehen, daß die Umformer-Elektronik eingerichtet ist, für den Fall, daß im wenigstens einen Wirbelsensorsignal weder die erste Nutzkomponente noch die zweite Nutzkomponente ermittelt ist, weder Strömungsparameter-Meßwerte erster Art noch Strömungsparameter-Meßwerte zweiter Art von größer als Null bereitzustellen.

Ein Grundgedanke der Erfindung besteht darin, den Umstand auszunutzen, daß das Wirbelsensorsignal bei Meßsytemen der in Rede stehenden Art typischerweise auch wenigstens eine spektrale Signalkomponente enthält, die einer dem Wirbelsensor immanenten mechanische Resonanzfrequenz entsprich bzw. diese repräsentiert, und zwar dann, wenn Fluid am Wirbelsensor vorbeiströmt, ggf. auch mit überhöhter Strömungsgeschwindigkeit, dahingehend, daß bei nicht nicht ausgebildeter Kärmän'sche Wirbelstraße anhand des Auftretens nämlicher spektraler Signalkomponente erkannt werden kann, ob das Fluid strömt oder nicht. Darüberhinaus ist ferner erkannt worden, daß bei Meßsystemen der in Rede stehenden Art für den Fall, daß trotz strömendem Fluid keine Kärmän'sche Wirbelstraße am Wirbelsensor ausgebildet ist, regelmäßig davon ausgegangen werden kann, daß das Fluid exakt mit einer seiner Schallgeschwingkeit entsprechenden Strömungsgeschwindigkeit am Staukörper bzw. am Wirbelsensor vorbeiströmt, und daß umgekehrt in Kenntnis der Zusammensetzung des Fluids und dessen thermodynamischen Zustands nämliche Schallgeschwindigkeit wiederum ermittelt und als Strömungsgeschwindigkeit ausgegeben werden kann.

Ein Vorteil der Erfindung ist u.a. auch darin zusehen, daß zumindest die Detektion von überhöhten Strömungsgeschwindigkeiten, ggf. sogar deren genau Berechnung, häufig allein durch eine entsprechenden Modifikation der in der Umformer-Elektronik moderner Meßsysteme typischerweise als Firm- und/oder Software implementierten Berechnungsalgorithmik eingerichtet, beispielsweise nämlich auch bei bereits installierten Meßsysteme durch ein entsprechendes Upgrade von deren Firm- bzw. Software einfach nachgerüstet werden kann.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1, 2: schematisch in verschieden Ansichten ein - hier als Wirbel-Durchflußmeßgerät ausgebildetes - Meßsystem mit einem Wirbelsensor und einer Umformer-Elektronik zum Messen wenigstens eines Strömungsparameters eines in einer Rohrleitung strömenden Fluids;
- Fig. 3: exemplarisch Leistungsdichtespektren von mittels eines Meßsystems gemäß der Fig. 1 bzw. 2 bei unterschiedlichen Strömungsgeschwindigkeiten generierten Wirbelsensorsignalen; und
- Fig. 4a, 4b, 4c, 4d: schematisch, teilweise auch geschnittenen Ansichten ein Ausführungsbeispiel eines für die Verwendung in einem Meßsystem gemäß der Fig. 1 bzw. 2 geeigneten, Wirbelsensors.a

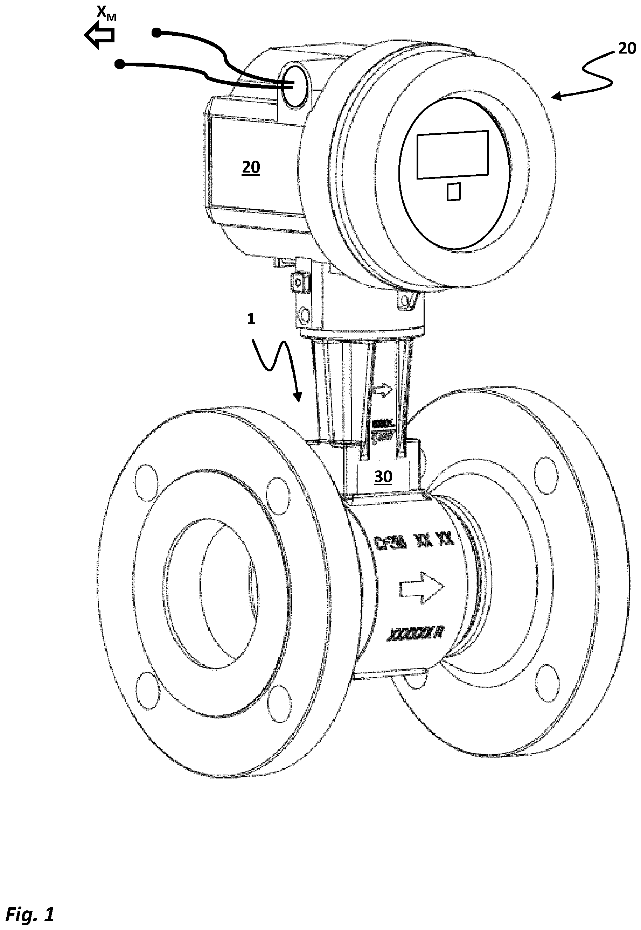

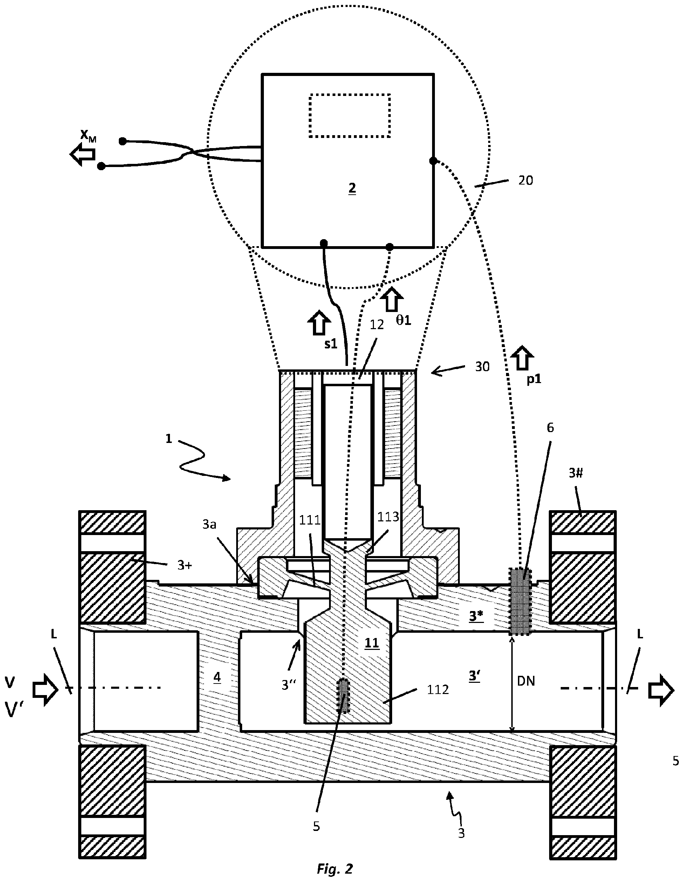

In Fig. 1 und 2 ist ein Ausführungsbeispiel für ein Meßsystem zum Messen wenigstens eines, ggf. auch zeitlich veränderlichen Strömungsparameters, beispielsweise nämlich einer Strömungsgeschwindigkeit u und/oder einer Volumen- und/oder Massenstrom, eines in einer Rohrleitung strömenden Fluids, beispielsweise eines Gases oder eines Aerosols, gezeigt. Die Rohrleitung kann beispielsweise als Anlagenkomponente eines Wärmeversorgungsnetzes oder eines Turbinenkreislaufes ausgebildet, mithin kann das Fluid beispielsweise Dampf, insb. auch gesättigter Dampf oder überhitzter Dampf, oder beispielsweise auch ein aus einer Dampfleitung abgeführtes Kondensat sein. Fluid kann aber beispielsweise auch ein (komprimiertes) Erd- oder ein Biogas sein, mithin kann die Rohrleitung beispielsweise auch Komponente einer Erd- oder einer Biogasanlage oder eines Gasversorgungsnetzes sein. Nach einer weiteren Ausgestaltung der Erfindung ist das Meßsystem auch dafür vorgesehen, den wenigstens einen Strömungsparameter auch dann zu messen, wenn das Fluid mit einer erhöhten, nämlich einer mehr als einem 0,3-fachen seiner momentanen Schallgeschwindigkeit c, mithin mit einer einer Mach-Zahl Ma (Ma = u / c) von mehr als 0,3 (Ma > 0,3) entsprechenden Strömungsgeschwindigkeit durch den das Fluid dem Meßsystem zuführende Rohrleitungsabschnitt strömt, wie es beispielsweise während des Anfahrens einer Dampf führenden Anlagenkomponente, etwa in einem Wärmeversorgungsnetz oder in einem Turbinenkreislauf, gelegentlich beobachtet werden kann.

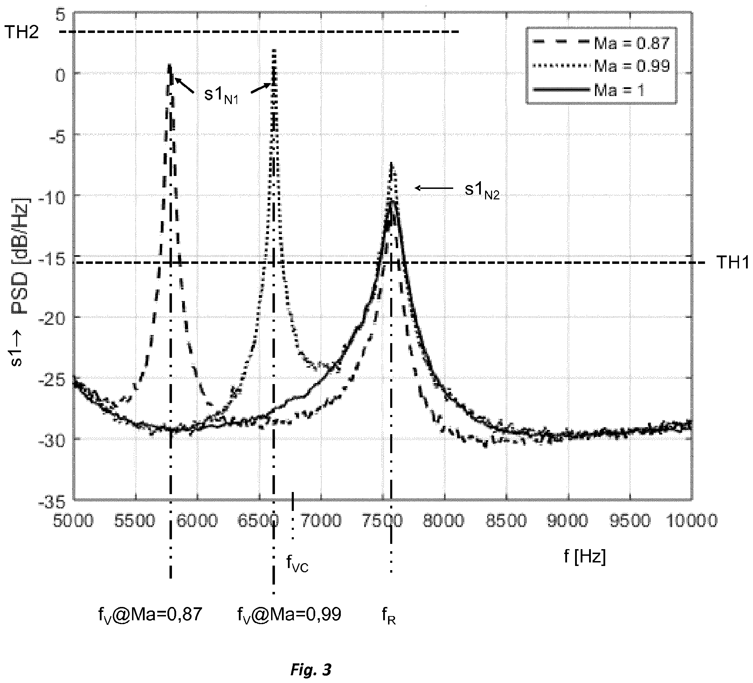

Das Meßsystem umfaßt ein in der Verlauf der vorbezeichneten Rohrleitung einsetzbares Rohr 3 mit einem von einer - beispielsweise metallischen - Wandung 3* des Rohrs umhüllten Lumen 3', das sich von einem Einlaßende 3+ bis zu einem Auslaßende 3# erstreckt und das dafür eingerichtet ist, das in der Rohrleitung strömende Fluid zu führen bzw. von nämlichem Fluid in Richtung einer Hauptströmungsrichtung des Meßsystems durchströmt zu werden. Im hier gezeigten Ausführungsbeispiel ist am Einlaßende 3+ wie auch am Auslaßende 3# ferner jeweils ein dem Herstellen einer Leckage freien Flanschverbindung mit jeweils einem korrespondierenden Flansch an einem ein- bzw. auslaßseitig Leitunsgsegment der Rohrleitung dienender Flansch vorgesehen. Desweiteren kann das Rohr 3, wie in Fig. 1 oder 2 dargestellt, im wesentlichen gerade, beispielsweise nämlich als Hohlzylinder mit zumindest abschnittsweise kreisförmigem Querschnitt ausgebildet sein, derart, daß das Rohr 3 eine das Einlaßende 3+ und das Auslaßende 3# imaginär verbindende gedachte gerade Längsachse L aufweist. Das Meßsystem weist ferner einen innerhalb des Lumens 3' angeordneten - beispielsweise prismatischen oder zylindrischen - Stauköper 4, der dafür eingerichtet ist, im daran vorbei strömenden Fluid Wirbel mit einer von einer momentanen Strömungsgeschwindigkeit u nämlichen Fluids abhängigen Ablösefrequenz f_{V} (f_{V} ~ u), zu generieren, derart, daß im stromabwärts des Staukörpers strömenden Fluid eine Kärmänsche Wirbelstraße ausgebildet ist, sowie einen - beispielsweise stromabwärts des Staukörpers 4 angeordneten oder darin integrierten - Wirbelsensor 1 zum Erfassen von Wirbeln der Kärmänsche Wirbelstraße, beispielsweise nämlich damit einhergehenden, nämlich bei konstanter Strömungsgeschwindigkeit u periodischen Druckschwankungen im strömenden Fluid, auf. Nämlicher Wirbelsensor 1 ist im besonderen dafür eingerichtet, wenigstens ein, insb. elektrisches oder optisches, sich zeitlich änderndes, beispielsweise nämlich mit den vorbezeichneten Druckschwankungen korrespondierendes, Wirbelsensorsignal s1 bereitzustellen; dies im besonderen in der Weise, daß das Wirbelsensorsignal s1 - wie auch aus Fig. 3 ohne weiteres ersichtlich - eine erste Nutzkomponente s1_{N1}, nämlich eine die Ablösefrequenz f_{V} repräsentierende - beispielsweise eine nicht unter einem vorgegebenen Schwellenwert TH1 für Signalrauschen liegende, nämlich zumindest eine minimale spektrale Leistungsdichte bzw. eine entsprechende minimale Amplitude aufweisende, und/oder nicht oberhalb eines Schwellenwerts TH2 für Signalrauschen liegende, nämlich höchstens eine maximale spektrale Leistungsdichte bzw. eine entsprechende maximale Amplitude aufweisende - erste spektrale Signalkomponente (@f_{V}) enthält, falls im stromabwärts des Staukörpers strömenden Fluid eine Kärmänsche Wirbelstraße ausgebildet ist. Indem dem Wirbelsensor 1 naturgemäß auch eine Vielzahl natürlicher Schwingungsmoden innewohnen, von denen im Betrieb des Meßsystems eine oder mehrere angeregt sein können, enthält das Wirbelsensorsignal - wie auch aus Fig. 3 ohne weiteres ersichtlich - typischerweise auch eine oder mehrere spektrale Signalkomponente, die mit einer jeweiligen Resonanzfrequenz (f_{R}) eines der vorbezeichneten Schwingungsmoden korrespondieren. Im besonderen hat sich gezeigt, daß der Wirbelsensor 1 durch das daran vorbeiströmende Fluid auch zu Vibrationen auf einer oder mehreren der vorbezeichneten Resonanzfrequenzen angeregt sein kann, bzw. daß umgekehrt zumindest eine der vorbezeichneten Vibrationen nicht nennenswert oder gar nicht angeregt ist, falls kein Fluid am Wirbelsensor vorbeiströmt. Dementsprechend enthält das Wirbelsensorsignal - wie auch aus Fig. 3 ohne weiteres ersichtlich - zumindest zeitweise auch wenigstens eine - insb. eine hinsichtlich einer spektralen Leistungsdichte bzw. Amplitude nicht unter einem dafür vorgegebenen ersten Schwellenwert für Signalrauschen (TH1) und/oder nicht oberhalb eines zweiten Schwellenwerts für Signalrauschen (TH2) liegende - zweite spektrale Signalkomponente (@f_{R}), die eine mechanische Resonanzfrequenz f_{R} des Wirbelsensors - beispielsweise nämlich eine niedrigste Resonanzfrequenz und/oder eine stets oberhalb der Ablösefrequenz f_{V} liegende Resonanzfrequenz und/oder eine einer Resonanzfrequenz eines der Detektion der Wirbel dienlichen natürlichen Schwingungsmodes - repräsentiert; dies insb. dann, falls Fluid am Wirbelsensor vorbeiströmt und/oder dann nicht, falls kein Fluid am Wirbelsensor vorbeiströmt.

Nach einer weiteren Ausgestaltung der Erfindung weist das Meßsystem einen Temperatursensor 5, der eingerichtet ist, wenigstens ein Temperatursensorsignal θ1 bereitzustellen, das einer Änderung einer Temperatur des strömenden Fluids mit einer Änderung wenigstens eines Signalparameters folgt, und/oder weist das Meßsystem einen Drucksensor 6 auf, der eingerichtet ist, wenigstens ein Drucksensorsignal p1 bereitzustellen, das einer Änderung eines, insb. statischen, Drucks des strömenden Fluids mit einer Änderung wenigstens eines Signalparameters folgt. Der Temperatursensor kann beispielsweise stromabwärts des Staukörpers, ggf. auch innerhalb des Wirbelsensors, oder - wie auch in Fig. 2 schematisch dargestellt - innerhalb des Staukörpers angeordnet sein. Ferner kann auch der Drucksensor beispielsweise stromabwärts des Staukörpers oder innerhalb des Staukörpers angeordnet sein.

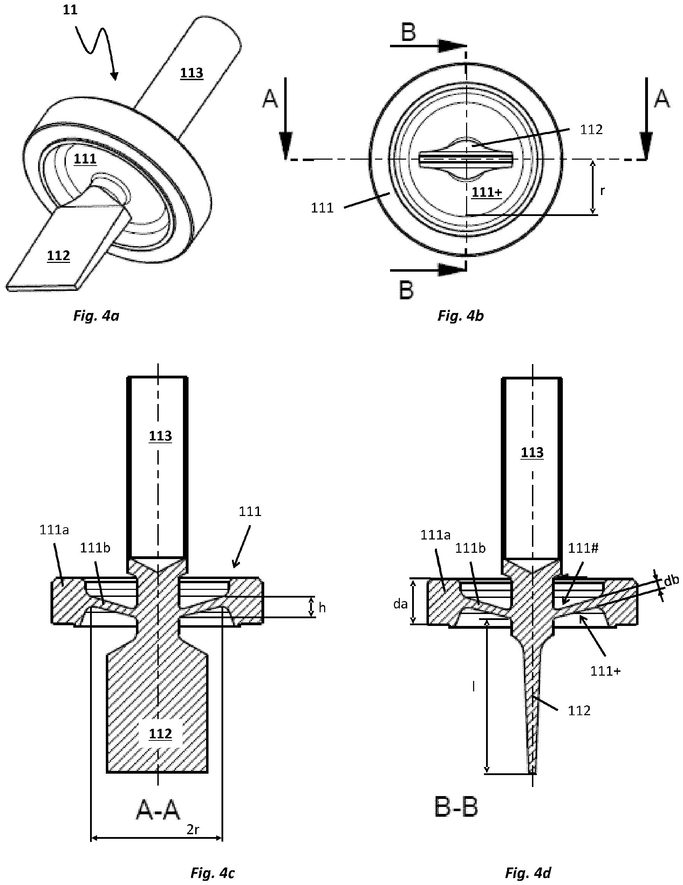

Gemäß einer weiteren Ausgestaltung der Erfindung ist der Wirbelsensor 1, wie auch in Fig. 2 und den Fig. 4a, 4b, 4c, 4d jeweils dargestellt bzw. aus einer Zusammenschau nämlicher Figuren ohne weiteres ersichtlich, mittels eines, insb. membranartigen bzw. scheibenförmigen, Verformungskörpers 111 sowie einer eine linksseitige erstes Seitenfläche 112+ sowie eine rechtsseitige zweite Seitenfläche 112# aufweisenden Sensorfahne 112 gebildet, die sich ausgehend von einer ersten Oberfläche 111+ des Verformungskörpers 111 bis zu einem distalen, nämlich vom Verformungskörper 111 bzw. dessen Oberfläche 111+ entfernten (freien) Ende erstreckt und die die dafür eingerichtet ist, von strömenden Fluid umströmt zu werden. Der Wirbelsensor und der Staukörper sind hierbei im besonderen so dimensioniert und angeordnet, daß die Sensorfahne 112 in einem solchen Bereich in das Lumen 3* des Rohrs bzw. das darin geführte Fluid hineinragt, der im Betrieb des Meßsystems regelmäßig von der Kármánschen Wirbelstraße eingenommen wird. Der Verformungskörper 111 weist ferner eine der ersten Oberfläche 111+ gegenüberliegende, beispielsweise zur ersten Oberfläche 111+ zumindest teilweise parallele, zweite Oberfläche 111# sowie ein, beispielsweise kreisringförmiges und/oder mit einer Dichtfläche versehenes, äußeres Randsegment 111a auf. Das äußere Randsegment 111a hat eine Dicke, die - wie in den Fig. 2 bzw. 4a, 4b, 4c, 4d angedeutet - im Vergleich zu einer minimalen Dicke eines von nämlichem Randsegment 111a eingeschlossen inneren - hier nämlich die Sensorfahne 112 tragenden - Segment 111b wesentlich größer ist. Verformungskörper 111 und Sensorfahne 112 sind im besonderen dafür eingerichtet, zu erzwungenen Schwingungen um eine gemeinsame statischen Ruhelage angeregt zu werden, derart, daß die Sensorfahne 112 den Verformungskörper 111 elastisch verformende Pendelbewegungen in einer - im wesentlichen quer zur vorbezeichneten Hauptströmungsrichtung verlaufenden - Detektionsrichtung bzw. Schwingungsbewegungen gemäß einer dem Wirbelsensor innewohnenden natürlichen Schwingungsmode ausführt. Die Sensorfahne 112 weist dementsprechend gemäß einer weiteren Ausgestaltung der Erfindung eine Breite b, gemessen als eine maximale Erstreckung in Richtung der Hauptströmungsrichtung, auf die wesentlich größer ist, als eine Dicke d der Sensorfahne 112, gemessen als eine maximale seitlich Erstreckung in Richtung der Detektionsrichtung. Im in den Fig. 4a, 4b, 4c, 4d dargestellten Ausführungsbeispiel ist die Sensorfahne 112 im wesentlichen keilförmig ausgebildet; sie kann aber beispielsweise auch, wie bei derartigen Wirbelsensoren durchaus üblich, als eine relativ dünne, ebene Platte ausgebildet sein. Nach einer weiteren Ausgestaltung der Erfindung sind der Wirbelsensor 1 und das Rohr 3 ferner so dimensioniert, daß eine Länge I der Sensorfahne 112, gemessen als minimaler Abstand zwischen einem proximalen, nämlich an den Verformungskörper 111 grenzenden Ende der Sensorfahne 112 bis zum distalen Ende der Sensorfahne 112 mehr als einer Hälfte eines Kalibers DN des Rohrs 3 bzw. weniger als 95% nämlichen Kalibers DN entspricht. Die Länge I kann beispielsweise - wie bei vergleichsweise kleinem Kaliber von weniger als 50 mm durchaus üblich - auch so gewählt sein, daß nämliches distales Ende der Sensorfahne 112 nur noch einen sehr geringen minimalen Abstand zur Wandung 3* des Rohrs 3 aufweist. Bei Rohren mit vergleichsweise großem Kaliber von 50 mm oder mehr kann die Sensorfahne 112 - wie bei Meßsystemen der in Rede stehenden Art durchaus üblich bzw. wie auch aus der Fig. 2 ersichtlich - beispielsweise auch deutlich kürzer ausgebildet sein, als eine Hälfte eines Kalibers des Rohrs 3. Verformungskörper 111 und Sensorfahne 112 können desweiteren beispielsweise Bestandteile ein und desselben monolithischen Formteils sein, das beispielsweise gegossen oder durch ein generatives Verfahren, wie etwa 3D-Laserschmelzen, hergestellt ist; Verformungskörper und Sensorfahne können aber auch als zunächst voneinander getrennte bzw. erst nachträglich stoffschlüssig miteinander verbundene, beispielsweise nämlich miteinander verschweißte bzw. verlötete, Einzelteile ausgebildet, mithin aus entsprechend stoffschlüssig miteinander verbindbaren Materialien hergestellt sein. Der Verformungskörper 111 kann - wie bei derartigen Wirbelsensoren durchaus üblich - zumindest anteilig, beispielsweise nämlich überwiegend oder vollständig, aus einem Metall, wie z.B. Edelstahl bzw. einer Nickelbasislegierung, bestehen. Ebenso kann auch die Sensorfahne zumindest anteilig aus einem Metall, beispielsweisenämlich einem Edelstahl bzw. einer Nickelbasislegierung, bestehen; insbesondere können der Verformungskörper 111 und die Sensorfahne 112 auch aus dem gleichen Material hergestellt werden. Ferner weist der Wirbelsensor ein - beispielsweise als piezoelektrischer Wandler, als Komponente eines Kondensators ausgebildetes, kapazitives oder beispielsweise auch als Komponente eines Fotodetektor ausgebildetes, optisches - Wandlerelement 12 zum Generieren eines zeitlich ändernde - typischerweise nämlich zumindest zeitweise periodische - Bewegungen der Sensorfahne bzw. gleichermaßen zeitlich ändernde Verformungen des Verformungskörpers 111 repräsentierenden, hier auch als Wirbelsensorsignal dienenden Signals, beispielsweise eine durch die vorbezeichneten Bewegungen modulierte veränderliche elektrische Spannung oder entsprechend moduliertes Laserlicht. Der Wirbelsensor 1 ist zudem in das Rohr 3 eingesetzt, derart, daß die erste Oberfläche des Verformungskörpers 111 dem Lumen 3' des Rohrs zugewandt ist, mithin die Sensorfahne in nämliches Lumen hineinragt.

Der Wirbelsensor 1 ist im in Fig. 1 bzw. 2 gezeigten Ausführungsbeispiel von außen durch eine in der Wandung eingeformte Öffnung 3" hindurch in das Lumen des Rohrs eingeführt und im Bereich nämlicher Öffnung - beispielsweise auch wieder lösbar - von außen an der Wandung 3* fixiert, und zwar so, daß die Oberfläche 111+ des Verformungskörpers 111 dem Lumen 3' des Rohrs 3 zugewandt ist, mithin die Sensorfahne 112 in nämliches Lumen hineinragt. Insbesondere ist der Sensor 1 so in die Öffnung 3"eingesetzt, daß der Verformungskörper 111 die Öffnung 3" überdeckt bzw. hermetisch verschließt. Nämliche Öffnung kann beispielsweise so ausgebildet sein, daß sie - wie bei Meßsystemen der in Rede stehenden Art durchaus üblich - einen (Innen-)Durchmesser aufweist, der in einem Bereich zwischen 10 mm und ca. 50 mm liegt. Nach einer weiteren Ausgestaltung der Erfindung ist in der der Öffnung 3" eine dem Haltern des Verformungskörpers an der Wandung 3* dienende Fassung 3a ausgebildet. Der Wirbelsensor 1 kann hierbei beispielsweise durch stoffschlüssiges Verbinden, insb. nämlich durch Verschweißen oder Verlöten, von Verformungskörper 111 und Wandung 3* am Rohr 3 fixiert sein; er kann aber beispielsweise auch mit dem Rohr 3 lösbar verbundenen, beispielsweise nämlich damit verschraubt bzw. daran angeschraubt sein. In der der Fassung 3a kann ferner wenigstens eine, beispielsweise auch umlaufende bzw. kreisringartige, Dichtfläche ausgebildet sein, die dafür eingerichtet ist, im Zusammenspiel mit dem Verformungskörper 111 und einem ggf. vorgesehenen, beispielsweise ringförmige oder ringscheibenförmige, Dichtelement die Öffnung 3" entsprechend abzudichten. Nicht zuletzt für den Fall, daß der Wirbelsensor in die vorbezeichnete Fassung 3a eingesetzt und lösbar mit dem Rohr 3 verbunden werden soll, kann auch das Randsegment 111a des Verformungskörpers 111 in vorteilhafter Weise ferner mit einer, beispielsweise auch mit der in der Öffnung 3" ggf. vorgesehenen Dichtfläche korrespondierenden und/oder kreisringartigen, Dichtfläche versehen sein.

Zum Kompensieren von aus allfälligen Bewegungen des Wirbelsensors - etwa infolge von Vibration der vorbezeichneten, an das Rohr angeschlossenen Rohrleitung - resultierenden Kräften und/oder Momenten bzw. zum Vermeiden von daraus resultierenden unerwünschten, nämlich das Sensorsignal s1 verfälschenden Bewegungen der Sensorfahne bzw. des Verformungskörpers 111 weist der Wirbelsensor 1 nach einer weiteren Ausgestaltung der Erfindung ferner einen sich ausgehend von der zweiten Oberfläche 111# des Verformungskörpers 111 erstreckenden, beispielsweise stab-, platten- oder hülsenförmigen, Ausgleichskörper 114 auf. Nämlicher Ausgleichskörper 114 kann zudem auch als eine Halterung des Wandlerelements 12 dienen oder auch als ein Bestandteil des Wandlerelements 12 dienen, beispielsweise als eine bewegliche Elektrode eines nämliches (kapazitives) Wandlerelement bildenden Kondensators. Der Ausgleichskörper 114 kann beispielsweise aus dem gleichen Material bestehen, wie der Verformungskörper und/oder wie die Sensorfahne, beispielsweise einem Metall. Beispielsweise kann der Ausgleichskörper 114 nämlich aus einem Edelstahl bzw. einer Nickelbasislegierung hergestellt sein. Nach einer weiteren Ausgestaltung der Erfindung sind Verformungskörper 111 und Ausgleichskörper 114 stoffschlüssig miteinander verbunden, beispielsweise miteinander verschweißt bzw. verlötet, mithin ist vorgesehen, Ausgleichskörper 114 und Verformungskörper 111 aus entsprechend stoffschlüssig miteinander verbindbaren Materialien herzustellen. Alternativ können Verformungskörper 111 und Ausgleichskörper 114 aber auch Bestandteile ein und desselben monolithischen Formteils sein, beispielsweise auch derart, daß Sensorfahne 111, Verformungskörper 112 und Ausgleichskörper 114 Bestandteile nämlichen Formteils sind. Sensorfahne 112 und Ausgleichskörper 114 können desweiteren - wie auch aus einer Zusammenschau der Fig. 4c und 4d ersichtlich - zueinander fluchtend angeordnet sein, derart, daß eine Trägheitshauptachse der Sensorfahne 112 in Verlängerung mit einer Trägheitshauptachse des Ausgleichskörpers 114 koinzidiert. Alternativ oder in Ergänzung können der Ausgleichskörper 114 und der Verformungskörper 111 zudem so positioniert und zueinander ausgerichtet sein, daß eine Trägheitshauptachse des Verformungskörpers 111 in Verlängerung mit einer Trägheitshauptachse des Ausgleichskörpers 114 koinzidiert. Darüberhinaus können Sensorfahne 112, Ausgleichskörper 114 und Verformungskörper 111 auch so positioniert und zueinander ausgerichtet sein, daß - wie beispielsweise auch aus einer Zusammenschau der Fig. 2, 4a, 4b, 4c und 4d ersichtlich - eine Trägheitshauptachse des Wirbelsensor 11 sowohl zu einer Trägheitshauptachse der Sensorfahne 112 als auch einer Trägheitshauptachse des Ausgleichskörpers 114 wie auch einer Trägheitshauptachse des Verformungskörpers 111 parallel verläuft oder sowohl mit nämlicher Trägheitshauptachse der Sensorfahne als auch mit nämlicher Trägheitshauptachse Ausgleichskörpers wie auch mit nämlicher Trägheitshauptachse des Verformungskörpers koinzidiert. Zum Verarbeiten bzw. Auswerten des wenigstens einen Wirbelsensorsignals umfaßt das Meßsystem ferner eine - beispielsweise in einem druck- und/oder schlagfesten Schutzgehäuse 20 untergebrachte - Umformer-Elektronik 2, die an den Sensor 1 angeschlossen ist bzw. im Betrieb des Meßsystems mit dem Wirbelsensor 1 kommuniziert. Das Schutzgehäuse 20 für die Umformer-Elektronik 2 kann beispielsweise aus einem Metall, etwa einem Edelstahl oder Aluminium, und/oder mittels eines Gießverfahrens, wie z.B. einem Feinguß- oder einem Druckgußverfahren (HPDC), hergestellt sein; es kann aber beispielsweise auch mittels eines in einem Spritzgießverfahren hergestellten Kunststoffformteils gebildet sein. Im hier gezeigten Ausführungsbeispiel ist das Meßsystem zudem als ein Wirbel-Durchflußmeßgrät in Kompaktbauweise ausgebildet, bei dem das Schutzgehäuse 20 mit darin untergebrachter Umformer-Elektronik 2 - beispielsweise mittels eines halsförmigen Anschlußstutzen 30 - am Rohr gehaltert ist. Die - beispielsweise mittels wenigstens eines Mikroprozessors gebildete - Umformer-Elektronik 2 ist u.a. dafür eingerichtet, das Wirbelsensorsignal s1 zu empfangen sowie unter Verwendung des wenigstens einen Wirbelsensorsignal s1 den wenigstens einen Strömungsparameter, beispielsweise also die Strömungsgeschwindigkeit v bzw. den Volumen- oder Massenstrom V', repräsentierende Meßwerte X_{M} zu generieren, ggf. auch in Form digitaler Meßwerte. Die, beispielsweise digitalen, Meßwerte X_{M} können beispielsweise vor Ort visualisiert und/oder - drahtgebunden via angeschlossenen Feldbus und/oder drahtlos per Funk - an ein elektronisches Datenverarbeitungssystem, etwa eine Speicherprogrammierbare Steuerung (SPS) und/oder einen Prozeßleitstand, übermittelt werden. Dementsprechend weist das Meßsystem nach einer weiteren Ausgestaltung ein mit dessen Umformer-Elektronik 2 gekoppeltes Anzeigeelement und/oder wenigstens einen Datenausgang zur Ausgabe von von der Umformer-Elektronik 2 bereitgestellten Daten - beispielsweise nämlich den Meßwerten X_{M} für den wenigstens einen Strömungsparameter - und/oder von mittels der Umformer-Elektronik 2 generierten Meldungen auf. Nicht zuletzt für den Fall, daß in der Umformer-Elektronik 2 wenigstens ein dem Verarbeiten des Wirbelsensorsignals und dem Ermitteln von den wenigstens einen Strömungsparameter repräsentierenden digitalen Meßewerten dienlicher Mikroprozessor vorgesehen ist, kann die die Umformer-Elektronik nach einer weiteren Ausgestaltung der Erfindung wenigstens eine Wandlerschaltung A/D aufweisen, die eingerichtet ist, das wenigstens eine Wirbelsensorsignal zu empfangen und zu digitalisieren, insb. nämlich in ein digitales Wirbelsensorsignal zu wandeln und nämliches digitales Wirbelsensorsignal an einem Digitalausgang der Wandlerschaltung bereitzustellen. Für den vorbezeichneten Fall, daß das Meßsystem den Temperatursensor und/oder den Drucksensor aufweist, ist die Umformer-Elektronik 2 ferner eingerichtet, auch das wenigstens eine Temperatursensorsignal bzw. das wenigstens eine Drucksensorsignal zu empfangen, und ist die Umformer-Elektronik 2 zudem auch eingerichtet, anhand des wenigstens einen Temperatursensorsignals die Temperatur des Fluids repräsentierende Temperatur-Meßwerte X_{θ} zu ermitteln und/oder anhand des wenigstens einen Drucksensorsignals den Druck des Fluids repräsentierende Druck-Meßwerte Xₚ zu ermitteln.

Wie bereits erwähnt, ist der Wirbelsensor bzw. das damit gebildete Meßsystem im besonderen auch dafür vorgesehen, in einer solchen Anlagen eingesetzt zu werden, bei der das zu messende Fluid in der zuführenden Rohrleitung nominell mit einer vergleichsweise hohen, beispielsweise nämlich näherungsweise einem 0,3-fachen seiner Schallgeschwindigkeit entsprechenden, Strömungsgeschwindigkeit strömen gelassen wird. Untersuchungen an solchen, mittels konventioneller Meßsysteme der in Rede stehenden Art gebildeten Meßstellen haben gezeigt, daß es besonders während des Anfahrens der jeweiligen Anlage auch zu Situationen kommen kann, in den die Strömungsgeschwindigkeit innerhalb des Rohrs vorübergehend auch oberhalb einer für nämliches Meßsystem spezifizierten maximalen Strömungsgeschwindigkeit liegen kann, derart, daß das am Staukörper vorbeiströmende Fluid dann eine dessen momentaner Schallgeschwindigkeit c (c = u / Ma) entsprechende Strömungsgeschwindigkeit u aufweist. Weiterhin hat sich gezeigt, daß bei einer solchen hohen Strömungsgeschwindigkeit keine Wirbel mehr am Staukörper abgelöst werden, mithin im stromabwärts des Staukörpers strömenden Fluid keine Kärmänsche Wirbelstraße ausgebildet ist. Im Ergebnis dessen ist - wie auch aus Fig. 3 ersichtlich - auch die erste Nutzkomponente s1_{N1} währenddessen nicht mehr im Wirbelsensorsignal enthalten. Weiterführende Untersuchungen haben aber auch gezeigt, daß obwohl im strömenden Fluid keine Kärmänsche Wirbelstraße ausgebildet ist, auch durch das am Wirbelsensor mit überhöhter Strömungsgeschwindigkeit vorbeiströmende Fluid zumindest eine der vorbezeichneten natürlichen Schwingungsmoden auf deren momentaner Resonanzfrequenz angeregt sein können, derart, daß - wie auch aus Fig. 3 ersichtlich - das Wirbelsensorsignal auch bei nicht vorhandener erster Nutzkomponente wenigstens eine der vorbezeichneten mit einer der Resonanzfrequenzen des Wirbelsensors korrespondieren spektrale Signalkomponente mit einem vergleichsweise hohen Signalpegel enthält. Es hat sich zudem gezeigt, daß hierbei beispielsweise auch jene Signalkomponente einen vergleichsweise hohen Signalpegel aufweisen kann, die eine niedrigste mechanische Resonanzfrequenz des Wirbelsensors repräsentiert. Für einen dem in den Fig. 1 bzw. 2 gezeigten Ausführungsbeispiel entsprechenden Wirbelsensor entspricht nämliche niedrigste mechanische Resonanzfrequenz beispielsweise der Resonanzfrequenz jener natürlichen Schwingungsmode des Wirbelsensors, in der Sensorfahne 112 die vorbezeichneten, den Verformungskörper 111 elastisch verformenden Pendelbewegungen in Detektionsrichtung ausführt.

Um eine fehlerhafte Messung des Strömungsparameters während des Zeitraums, in dem keine Kármán'sche Wirbelstraße stromabwärts des Staukörpers ausgebildet ist, zu vermeiden, ist die Umformer-Elektronik 2 des erfindungsgemäß Meßsystems im besonderen eingerichtet, zu ermitteln, ob die die erste Nutzkomponente s1_{N1} und/oder zumindest die vorbezeichnete - im weiteren als zweite Nutzkomponente s1_{N2} bezeichnete - zweite spektrale Signalkomponente (@f_{R}) im wenigstens einen Wirbelsensorsignal enthalten ist. Zudem ist die Umformer-Elektronik 2 eingerichtet, für den Fall, daß die erste Nutzkomponente im wenigstens einen Wirbelsensorsignal s1 enthalten ist, sowohl anhand der ersten Nutzkomponente des wenigstens einen Wirbelsensorsignals die Ablösefrequenz f_{V} repräsentierende, beispielsweise auch digitale, Wirbelfrequenz-Meßwerte X_{f} zu ermitteln als auch Strömungsparameter-Meßwerte erster Art, nämlich unter Verwendung eines oder mehrerer Wirbelfrequenz-Meßwerte X_{f} berechnete, ggf. auch digitale Meßwerte X_{M} für den wenigstens einen Strömungsparameter bereitzustellen; dies insb. in der Weise, daß die Umformer-Elektronik 2 die Strömungsparameter-Meßwerte erster Art nach dem Wirbelzähler-Prinzip bzw. auch unter Verwendung einer Strouhal-Zahl, Sr (Sr ~ fᵥ / u), nämlich einer ein Verhältnis der Ablösefrequenz f_{V} zur Strömungsgeschwindigkeit u des am Staukörper vorbei strömenden Fluids repräsentierenden Kennzahl berechnet. Bei den Strömungsparameter-Meßwerten erster Art kann es sich demnach um auf herkömmliche Weise, nämlich so auch in konventionellen Meßsystemen der in Rede stehenden Art ermittelbare bzw. bislang ermittelte Strömungsparameter-Meßwerte handeln. Darüberhinaus ist die Umformer-Elektronik 2 des erfindungsgemäßen Meßsystems ferner aber auch dafür eingerichtet, für den Fall, daß die erste Nutzkomponente im wenigstens einen Wirbelsensorsignal nicht enthalten bzw. nicht ermittelt ist, zugleich aber die zweite Nutzkomponente im wenigstens einen Wirbelsensorsignal ermittelt, ist, eine - beispielsweis auch als Alarm dienliche - Meldung erster Art, nämlich eine Meldung zu generieren, die signalisiert, daß die momentane Strömungsgeschwindigkeit u des am Staukörper vorbei strömenden Fluids nicht kleiner ist als eine momentane Schallgeschwindigkeit c (c = u / Ma) nämlichen Fluids, mithin im den Wirbelsensor 3 umströmenden Fluid momentan keine Karman'sche Wirbelstraße ausgebildet und/oder das Meßsystem momentan außerhalb eines dafür vorab spezifizierten Meßbereichs betrieben ist. Alternativ oder in Ergänzung ist die Umformer-Elektronik 2 des erfindungsgemäßen Meßsystems zudem eingerichtet, für den vorbezeichneten Fall, daß die erste Nutzkomponente im wenigstens einen Wirbelsensorsignal nicht enthalten bzw. entsprechend nicht ermittelt ist, zugleich aber die zweite Nutzkomponente im wenigstens einen Wirbelsensorsignal ermittelt ist, keine Strömungsparameter-Meßwerten erster Art bereitzustellen bzw. ein entsprechendes, nämlich eine Ausgabe von Strömungsparameter-Meßwerten erster Art unterbindendes Steuerkommando zu generieren, beispielsweise derart, daß ein ansonsten die Ermittlung von Strömungsparameter-Meßwerten erster Art (nach dem Wirbelzähler-Prinzip) bewerkstelligender Berechnungsalgorithmus in der Umformer-Elektronik 2 einstweilen nicht ausgeführt wird. Dementsprechend kann die Umformer-Elektronik 2 nach einer weiteren Ausgestaltung der Erfindung auch dafür eingerichtet sein, lediglich für den Fall, daß die erste Nutzkomponente im wenigstens einen Wirbelsensorsignal s1 enthalten ist, ein eine Ausgabe von Strömungsparameter-Meßwerten erster Art veranlassendes Steuerkommando zu generieren, und/oder für den Fall, daß im wenigstens einen Wirbelsensorsignal weder die erste Nutzkomponente noch die zweite Nutzkomponente enthalten bzw. ermittelt ist, eine Meldung zweiter Art, nämlich eine Meldung zu generieren bzw. auszugeben, die signalisiert, daß momentan kein Fluid durch das Rohr 3 hindurchströmt. Die vorbezeichneten Meldungen erster, ggf. auch zweiter Art und/oder die vorbezeichneten Strömungsparameter-Meßwerte können beispielsweise mittels des vorbezeichneten Anzeigeelements und/oder an dem vorbezeichneten Datenausgang ausgegeben, beispielsweise nämlich vor Ort visualisiert bzw. an ein an das Meßsystem angeschlossenes elektronisches Datenverarbeitungssystem gesendet, werden.

Weitere Untersuchungen mit Meßsystemen der in Rede stehenden Art - nicht zuletzt auch mit typischen konventionellen Meßsystemen mit geradem Rohr und überwiegend kreiszylindrischem Lumen und/oder mit sowohl unmittelbar stromauf als auch unmittelbar stromab des Staukörpers im wesentlichen gleich großen Strömungsquerschnitten - haben ferner gezeigt, daß in unmittelbarer Nähe des jeweiligen Staukörpers, mithin auch jeweils im Bereich des Wirbelsensors, vom dort jeweils strömenden Fluid regelmäßig höchstens Strömungsgeschwindigkeiten erreicht werden können, die nicht höher als eine vorab bzw. im Betrieb des Meßsystems genau bestimmbare maximale Strömungsgeschwindigkeit sind; dies im besonderen in der Weise, daß im Zusammenspiel vom jeweiligen Rohr und dem darin jeweils untergebrachtem Staukörper ein - gelegentlich auch als Schalldüse bezeichnete - kritische Düse, nämlich eine solche Düse gebildet ist, bei der die Strömungsgeschwindigkeit u des am Staukörper vorbeiströmenden Fluids die vorbezeichnete maximale Strömungsgeschwindigkeit erreicht hat und nämliche Strömungsgeschwindigkeit u gleich der momentanen Schallgeschwindigkeit des Fluids ist, mithin einer Mach-Zahl Ma (Ma = u / c) von Eins (Ma = 1) entspricht, bzw. daß auch bei einer weiteren Erhöhung der vorbezeichneten erhöhte Strömungsgeschwindigkeiten des in dem das Fluid dem Meßsystem zuführende Rohrleitungsabschnitt strömenden Fluids, beispielsweise auf eine einer Mach-Zahl von 0,4 entsprechende Strömungsgeschwindigkeit, die Strömungsgeschwindigkeit u des am Staukörper vorbeiströmenden Fluids nicht weiter ansteigt. Im Ergebnis konnte also festgestellt werden, daß sich bei Meßsystemen der in Rede stehende Art in überraschender gleichwohl erfreulicher Weise genau für den erwähnten Fall, daß stromabwärts des Staukörpers die Kármán'sche Wirbelstraße aufgrund einer dafür zu hohen Strömungsgeschwindigkeit nicht ausgebildet, mithin im Wirbelsensorsignal keine erste Nutzkomponente enthalten ist, eine konstante, nämlich zunächst nicht mehr weiter zu erhöhende Strömungsgeschwindigkeit für das am Staukörper vorbei strömende Fluid einstellt. Dementsprechend ist die Umformer-Elektronik 2 nach einer weiteren Ausgestaltung der Erfindung ferner eingerichtet, unter Verwendung des wenigstens einen Wirbelsensorsignals die Mach-Zahl Ma (Ma = u / c) für das am Staukörper vorbei strömende Fluids zu ermitteln, beispielsweise auch nämliche Mach-Zahl repräsentierende Machzahl-Meßwerte X_{Ma} zu ermitteln bzw. zu berechnen. Beispielsweise kann die Umformer-Elektronik 2 hierbei auch eingerichtet, für den vorbezeichneten Fall, daß die zweite Nutzkomponente im wenigstens einen Wirbelsensorsignal enthalten und zugleich die erste Nutzkomponente im wenigstens einen Wirbelsensorsignal nicht enthalten bzw. nicht ermittelt ist, den Machzahl-Meßwert X_{Ma} auf einen vorgegebenen Festwert, beispielsweise nämlich auf eine der vorbezeichneten maximale Strömungsgeschwindigkeit entsprechende Machzahl und/oder auf Eins (Ma = 1), zu setzen bzw. nämlichen vorgegebenen Festwert als Machzahl-Meßwert X_{Ma} auszugeben.

Die Schallgeschwindigkeit c bzw. die vorbezeichnete, der Schallgeschwindigkeit c entsprechende maximale Strömungsgeschwindigkeit kann beispielsweise auch anhand der momentanen Temperatur des Fluids und/oder anhand eines momentanen Drucks des Fluids im Betrieb des Meßsystems ausreichend genau ermittelt werden, beispielsweise nämlich unter Anwendung eines Modells eines idealen Gases für das jeweilige Fluid. Für den erwähnten Fall, daß das Meßsystem den vorbezeichneten Temperatursensor umfaßt und die Umformer-Elektronik 2 ferner eingerichtet ist, auch das wenigstens eine Temperatursensorsignal zu empfangen und anhand dessen eine Temperatur des Fluids repräsentierende Temperatur-Meßwerte X_{θ} zu ermitteln, ist die Umformer-Elektronik 2 nach einer weiteren Ausgestaltung der Erfindung dementsprechend ferner dafür eingerichtet, auch Strömungsparameter-Meßwerte zweiter Art, nämlich unter Verwendung eines oder mehrerer Temperatur-Meßwerte, gleichwohl ohne Verwendung eines Wirbelfrequenz-Meßwerts berechnete Meßwerte für den wenigstens einen Strömungsparameter bereitzustellen und/oder ist die Umformer-Elektronik 2 eingerichtet, die Schallgeschwindigkeit c (c = u / Ma) des am Staukörper vorbei strömenden Fluids zu ermitteln, beispielsweise nämliche Schallgeschwindigkeit repräsentierende Schallgeschwindigkeit-Meßwerte X_{c} zu berechnen bzw. auszugeben; dies beispielsweise auch derart, daß Strömungsparameter-Meßwerte zweiter Art auch unter Verwendung eines oder mehrerer Schallgeschwindigkeit-Meßwerte X_{c} berechnet bzw. Schallgeschwindigkeit-Meßwerte X_{c} als Strömungsparameter-Meßwerte zweiter Art ausgegeben werden. Alternativ oder in Ergänzung kann die Umformer-Elektronik 2 auch eingerichtet sein, die vorbezeichneten Machzahl-Meßwerte X_{Ma} unter Verwendung sowohl des wenigstens einen Wirbelsensorsignals als auch des Temperatursensorsignals, beispielsweise nämlich anhand von daraus gewonnenen Temperatur-Meßwerten, zu ermitteln und/oder zumindest die Strömungsparameter-Meßwerte zweiter Art auch unter Verwendung eines oder mehrerer Machzahl-Meßwerte X_{Ma} zu berechnen. Für den erwähnten anderen Fall, daß das Meßsystem auch den vorbezeichneten Drucksensor 6 umfaßt und die Umformer-Elektronik 2 ferner eingerichtet ist, auch das wenigstens eine Drucksensorsignal zu empfangen und anhand dessen einen Druck des Fluids repräsentierende Druck-Meßwerte Xₚ zu ermitteln, ist die Umformer-Elektronik 2 nach einer weiteren Ausgestaltung der Erfindung dementsprechend ferner dafür eingerichtet, die Strömungsparameter-Meßwerte zweiter Art für den wenigstens einen Strömungsparameter auch unter Verwendung eines oder mehrerer Druck-Meßwerte Xₚ zu berechnen. Alternativ oder in Ergänzung kann die Umformer-Elektronik 2 ferner auch eingerichtet sein, die vorbezeichneten Schallgeschwindigkeit-Meßwerte X_{c} und/oder Machzahl-Meßwerte X_{Ma} unter Verwendung eines oder mehrerer Druck-Meßwerte Xₚ zu berechnen. Um den vorbezeichneten Berechnungsalgorithmus für die Strömungsparameter-Meßwerte erster Art auch für die Ermittlung von Strömungsparameter-Meßwerten zweiter Art verwenden zu können, kann die Umformer-Elektronik 2 ferner auch eingerichtet sein, für den Fall, daß die zweite Nutzkomponente im wenigstens einen Wirbelsensorsignal enthalten und zugleich die erste Nutzkomponente im wenigstens einen Wirbelsensorsignal nicht enthalten bzw. nicht ermittelt ist, eine Äquivalenzfrequenz f_{vc} (f_{vc} ~ Sr · c), nämlich eine einer theoretischen Ablösefrequenz bei mit Schallgeschwindigkeit c strömendem Fluid entsprechende bestimmte Frequenz zu ermitteln, beispielsweise anhand der Temperatur und/oder der Schallgeschwindigkeit c bzw. den dafür ermittelten Temperatur- und/oder Schallgeschwindigkeits-Meßwerten, und nämliche Äquivalenzfrequenz f_{vc} entsprechend zum Ermitteln von Meßwerten X_{M} für den wenigstens einen Strömungsparameter zu verwenden.

Nach einer weiteren Ausgestaltung der Erfindung ist die Umformer-Elektronik 2 eingerichtet ist, für den Fall, daß die zweite Nutzkomponente im wenigstens einen Wirbelsensorsignal enthalten und zugleich die erste Nutzkomponente im wenigstens einen Wirbelsensorsignal nicht enthalten bzw. nicht ermittelt ist, ein eine Ausgabe von Strömungsparameter-Meßwerten zweiter Art veranlassendes Steuerkommando zu generieren bzw. die Strömungsparameter-Meßwerte zweiter Art auszugeben. Zudem kann die Umformer-Elektronik 2 ferner eingerichtet sein, für den Fall, daß die erste Nutzkomponente im wenigstens einen Wirbelsensorsignal enthalten ist, ein eine Ausgabe von Strömungsparameter-Meßwerten zweiter Art unterbindendes Steuerkommando zu generieren bzw. keine Strömungsparameter-Meßwerte zweiter Art auszugeben. Alternativ oder in Ergänzung ist die Umformer-Elektronik 2 ferner eingerichtet, für den Fall, daß im wenigstens einen Wirbelsensorsignal weder die erste Nutzkomponente noch die zweite Nutzkomponente enthalten bzw. ermittelt ist, weder Strömungsparameter-Meßwerte erster Art noch Strömungsparameter-Meßwerte zweiter Art von größer als Null bereitzustellen.

Zum Verarbeiten des Wirbelsensorsignals weist die Umformer-Elektronik 2 nach einer weiteren Ausgestaltung ein, beispielsweise als Komponente der vorbezeichneten Wandlerschaltung A/D ausgebildetes, erstes Signalfilter auf, das dafür eingerichtet ist, an einem Signaleingang das Wirbelsensorsignal zu empfangen und an einem Filterausgang ein die erste Nutzkomponente des Wirbelsensorsignals enthaltendes, insb. nämlich die zweite Nutzkomponente stets nur abgeschwächt oder nicht enthaltendes, erstes Nutzsignal bereitzustellen. Unter Verwendung nämlichen - beispielsweise auch digitalen - ersten Nutzsignals kann die Umformer-Elektronik ferner ermitteln, ob die die erste Nutzkomponente im wenigstens einen Wirbelsensorsignal enthalten ist, etwa durch einen Vergleich einer Signalamplitude (bzw. einer spektralen Leistungsdichte) nämlichen Nutzsignals mit einem für die erste Nutzkomponente entsprechend vorgegebenen Referenzwert (TH1). Alternativ oder in Ergänzung weist die Umformer-Elektronik 2 ferner ein, beispielsweise als Komponente der vorbezeichneten Wandlerschaltung A/D ausgebildetes, zweites Signalfilter auf, das dafür eingerichtet ist, an einem Signaleingang das Wirbelsensorsignal zu empfangen und an einem Filterausgang ein die zweite Nutzkomponente des Wirbelsensorsignals enthaltendes, insb. nämlich die erste Nutzkomponente stets nur abgeschwächt oder nicht enthaltendes, zweites Nutzsignal bereitzustellen. Unter Verwendung des - beispielsweise digitalen - zweiten Nutzsignals kann die Umformer-Elektronik 2 ermitteln, ob die die zweite Nutzkomponente im wenigstens einen Wirbelsensorsignal enthalten ist, etwa durch einen Vergleich einer Signalamplitude (bzw. einer spektralen Leistungsdichte) nämlichen Nutzsignals mit einem für die zweite Nutzkomponente entsprechend vorgegebenen Referenzwert (TH1). Alternativ oder in Ergänzung kann die Umformer-Elektronik 2 auch eingerichtet sein, eine diskrete Fourier-Transformation (DFT) und/oder eine Autokorrelation (AKF) des wenigstens einen Wirbelsensorsignals zu generieren, um hernach basierend auf nämlicher diskreter Fourier-Transformation des wenigstens einen Wirbelsensorsignals bzw. basierend auf nämlicher Autokorrelation (AKF) des wenigstens einen Wirbelsensorsignals zu ermitteln, ob die die erste Nutzkomponente und/oder die zweite Nutzkomponente im wenigstens einen Wirbelsensorsignal enthalten ist.

## Patentansprüche

1. Meßsystem zum Messen wenigstens eines, insb. zeitlich veränderlichen, Strömungsparameters, insb. einer Strömungsgeschwindigkeit und/oder einer Volumenstrom und/oder einer Massenstrom, eines in einer Rohrleitung strömenden Fluids, insb. nämlich eines Gases oder eines Aerosols, welches Meßsystem umfaßt:
- ein in den Verlauf nämlicher Rohrleitung einsetzbares Rohr (3) mit einem Lumen (3'), das dafür eingerichtet ist, das in der Rohrleitung strömende Fluid zu führen bzw. von nämlichem Fluid durchströmt zu werden;
- einen im Lumen des Rohrs (3) angeordneten, insb. prismatischen oder zylindrischen, Stauköper (4), der dafür eingerichtet ist, im daran vorbei strömenden Fluid Wirbel mit einer von einer momentanen Strömungsgeschwindigkeit, u, nämlichen Fluids abhängigen Ablösefrequenz, f_{V} (fv ~ u), zu generieren, derart, daß im stromabwärts des Staukörpers strömenden Fluid eine Kármánsche Wirbelstrasse ausgebildet ist;
- einen, insb. stromabwärts des Staukörpers angeordneten oder darin integrierten, Wirbelsensor (1),
-- der wenigstens eine, insb. niedrigste und/oder stets oberhalb der Ablösefrequenz liegende, mechanische Resonanzfrequenz, f_{R}, aufweist
-- und der eingerichtet ist, wenigstens ein, insb. elektrisches oder optisches, sich zeitlich änderndes Wirbelsensorsignal (s1) bereitzustellen,
--- das eine erste Nutzkomponente (s1_{N1}), nämlich eine die Ablösefrequenz, f_{V}, repräsentierende - insb. eine nicht unter einem dafür vorgegebenen Schwellenwert für Signalrauschen liegenden Signalpegel aufweisende - erste spektrale Signalkomponente enthält, falls im stromabwärts des Staukörpers strömenden Fluid eine Kármánsche Wirbelstrasse ausgebildet ist,
--- und das eine zweite Nutzkomponente (s1_{N2}), nämlich eine die wenigstens eine mechanische Resonanzfrequenz, f_{R}, des Wirbelsensors repräsentierende - insb. eine nicht unter einem dafür vorgegebenen Schwellenwert für Signalrauschen liegenden Signalpegel aufweisende - zweite spektrale Signalkomponente enthält, falls Fluid am Wirbelsensor vorbeiströmt;
- sowie eine, insb. mittels wenigstens eines Mikroprozessors gebildete, Umformer-Elektronik (2) zum Auswerten des wenigstens einen Wirbelsensorsignals und zum Ermitteln von, insb. digitalen, Meßwerten (X_{M}) für den wenigstens einen Strömungsparameter;
-- wobei die Umformer-Elektronik (2) eingerichtet ist,
-- das wenigstens eine Wirbelsensorsignal zu empfangen
-- und zu ermitteln, ob die die erste Nutzkomponente und/oder die zweite Nutzkomponente im wenigstens einen Wirbelsensorsignal enthalten ist;
- wobei die Umformer-Elektronik (2) eingerichtet ist, für den Fall, daß die erste Nutzkomponente im wenigstens einen Wirbelsensorsignal enthalten ist,
-- sowohl anhand der ersten Nutzkomponente des wenigstens einen Wirbelsensorsignals die Ablösefrequenz repräsentierende, insb. digitale, Wirbelfrequenz-Meßwerte zu ermitteln
-- als auch Strömungsparameter-Meßwerte erster Art, nämlich unter Verwendung eines oder mehrerer Wirbelfrequenz-Meßwerte berechnete, insb. digitale, Meßwerte (X_{M}) für den wenigstens einen Strömungsparameter bereitzustellen;
- **dadurch gekennzeichnet, dass** die Umformer-Elektronik (2) eingerichtet ist, für den Fall, daß die erste Nutzkomponente im wenigstens einen Wirbelsensorsignal nicht enthalten bzw. nicht ermittelt ist, zugleich die zweite Nutzkomponente im wenigstens einen Wirbelsensorsignal aber enthalten bzw. ermittelt ist,
-- keine Strömungsparameter-Meßwerten erster Art bereitzustellen
-- und/oder ein eine Ausgabe von Strömungsparameter-Meßwerten erster Art unterbindendes Steuerkommando zu generieren
-- und/oder eine Meldung zu generieren, insb. nämlich auszugeben, die signalisiert, daß die momentane Strömungsgeschwindigkeit, u, des am Staukörper vorbei strömenden Fluids nicht kleiner ist als eine momentane Schallgeschwindigkeit, c (c = u / Ma), nämlichen Fluids, insb. nämlich, daß die momentane Strömungsgeschwindigkeit des am Staukörper vorbei strömenden Fluids gleich dessen momentaner Schallgeschwindigkeit ist, mithin einer Mach-Zahl, Ma (Ma = u / c), von Eins (Ma = 1) entspricht.

2. Meßsystem nach dem vorherigen Anspruch,
- wobei die Umformer-Elektronik (2) eingerichtet ist, für den Fall, daß die erste Nutzkomponente im wenigstens einen Wirbelsensorsignal enthalten ist, ein eine Ausgabe von Strömungsparameter-Meßwerten erster Art veranlassendes Steuerkommando zu generieren; und/oder
- wobei die Umformer-Elektronik (2) ein erstes Signalfilter aufweist, das dafür eingerichtet ist, an einem Signaleingang das Wirbelsensorsignal zu empfangen und an einem Filterausgang ein die erste Nutzkomponente des Wirbelsensorsignals enthaltendes, insb. nämlich die zweite Nutzkomponente stets nur abgeschwächt oder nicht enthaltendes, erstes, insb. digitales, Nutzsignal bereitzustellen, insb. nämlich unter Verwendung des ersten Nutzsignals zu ermitteln, ob die die erste Nutzkomponente im wenigstens einen Wirbelsensorsignal enthalten ist; und/oder
- wobei die Umformer-Elektronik (2) ein zweites Signalfilter aufweist, das dafür eingerichtet ist, an einem Signaleingang das Wirbelsensorsignal zu empfangen und an einem Filterausgang ein die zweite Nutzkomponente des Wirbelsensorsignals enthaltendes, insb. nämlich die erste Nutzkomponente stets nur abgeschwächt oder nicht enthaltendes, zweites, insb. digitales, Nutzsignal bereitzustellen, insb. nämlich unter Verwendung des zweiten Nutzsignals zu ermitteln, ob die die zweite Nutzkomponente im wenigstens einen Wirbelsensorsignal enthalten ist; und/oder
- wobei die Umformer-Elektronik (2) eingerichtet ist, eine diskrete Fourier-Transformation (DFT) des wenigstens einen Wirbelsensorsignals zu generieren sowie basierend auf nämlicher diskreter Fourier-Transformation des wenigstens einen Wirbelsensorsignals zu ermitteln, ob die die erste Nutzkomponente und/oder die zweite Nutzkomponente im wenigstens einen Wirbelsensorsignal enthalten ist; und/oder
- wobei die Umformer-Elektronik (2) eingerichtet ist, eine Autokorrelation (AKF) des wenigstens einen Wirbelsensorsignals zu berechnen, sowie basierend auf nämlicher Autokorrelation (AKF) des wenigstens einen Wirbelsensorsignals zu ermitteln, ob die die erste Nutzkomponente und/oder die zweite Nutzkomponente im wenigstens einen Wirbelsensorsignal enthalten ist; und/oder
- wobei die Umformer-Elektronik (2) eingerichtet ist, die Strömungsparameter-Meßwerte erster Art auch unter Verwendung einer Strouhal-Zahl, Sr (Sr ~ fᵥ / u), nämlich einer ein Verhältnis der Ablösefrequenz, f_{V}, zur Strömungsgeschwindigkeit, u, des am Staukörper vorbei strömenden Fluids repräsentierenden Kennzahl zu berechnen.

3. Meßsystem nach einem der vorherigen Ansprüche, weiters umfassend: einen, insb. stromabwärts des Staukörpers oder darin angeordneten, Temperatursensor, der eingerichtet ist, wenigstens ein Temperatursensorsignal bereitzustellen, das einer Änderung einer Temperatur des strömenden Fluids mit einer Änderung wenigstens eines Signalparameters folgt,
- wobei die Umformer-Elektronik (2) eingerichtet ist, das wenigstens eine Temperatursensorsignal zu empfangen sowie anhand des wenigstens einen Temperatursensorsignals nämliche Temperatur des Fluids repräsentierende Temperatur-Meßwerte (Xe) zu ermitteln;
- und wobei die Umformer-Elektronik (2) eingerichtet ist, Strömungsparameter-Meßwerte zweiter Art, nämlich unter Verwendung eines oder mehrerer Temperatur-Meßwerte, gleichwohl ohne Verwendung eines Wirbelfrequenz-Meßwerts berechnete Meßwerte (X_{M}) für den wenigstens einen Strömungsparameter bereitzustellen.

4. Meßsystem nach dem vorherigen Anspruch,
- wobei die Umformer-Elektronik (2) eingerichtet ist, für den Fall, daß die zweite Nutzkomponente im wenigstens einen Wirbelsensorsignal enthalten und zugleich die erste Nutzkomponente im wenigstens einen Wirbelsensorsignal nicht enthalten bzw. nicht ermittelt ist, ein eine Ausgabe von Strömungsparameter-Meßwerten zweiter Art veranlassendes Steuerkommando zu generieren; und/oder
- wobei die Umformer-Elektronik (2) eingerichtet ist, für den Fall, daß die erste Nutzkomponente im wenigstens einen Wirbelsensorsignal enthalten ist, ein eine Ausgabe von Strömungsparameter-Meßwerten zweiter Art unterbindendes Steuerkommando zu generieren; und/oder
- wobei die Umformer-Elektronik (2) eingerichtet ist, für den Fall, daß die zweite Nutzkomponente im wenigstens einen Wirbelsensorsignal enthalten und zugleich die erste Nutzkomponente im wenigstens einen Wirbelsensorsignal nicht enthalten bzw. nicht ermittelt ist, Strömungsparameter-Meßwerte zweiter Art auszugeben; und/oder
- wobei die Umformer-Elektronik (2) eingerichtet ist, für den Fall, daß die zweite Nutzkomponente im wenigstens einen Wirbelsensorsignal enthalten und zugleich die erste Nutzkomponente im wenigstens einen Wirbelsensorsignal nicht enthalten bzw. nicht ermittelt ist, eine anhand der Temperatur berechnete Äquivalenzfrequenz, nämlich eine der Schallgeschwindigkeit, c, entsprechende Frequenz zum Ermitteln von Meßwerten (X_{M}) für den wenigstens einen Strömungsparameter zu verwenden; und/oder
- wobei die Umformer-Elektronik (2) eingerichtet ist, für den Fall, daß die erste Nutzkomponente im wenigstens einen Wirbelsensorsignal enthalten ist, keine Strömungsparameter-Meßwerte zweiter Art auszugeben.

5. Meßsystem nach einem der Ansprüche 3 bis 4, wobei die Umformer-Elektronik (2) eingerichtet ist, unter Verwendung sowohl des wenigstens einen Wirbelsensorsignals als auch des wenigstens einen Temperatursensorsignals die Schallgeschwindigkeit, c (c = u / Ma), des am Staukörper vorbei strömenden Fluids zu ermitteln, insb. nämliche Schallgeschwindigkeit repräsentierende Schallgeschwindigkeit-Meßwerte (X_{c}) zu berechnen.

6. Meßsystem nach dem vorherigen Anspruch, wobei die Umformer-Elektronik (2) eingerichtet ist, zumindest die Strömungsparameter-Meßwerte zweiter Art auch unter Verwendung eines oder mehrerer Schallgeschwindigkeit-Meßwerte (X_{c}) zu berechnen, insb. nämlich Schallgeschwindigkeit-Meßwerte (X_{c}) als Strömungsparameter-Meßwerte zweiter Art auszugeben.

7. Meßsystem nach einem der Ansprüche 3 bis 6, wobei die Umformer-Elektronik (2) eingerichtet ist, unter Verwendung des wenigstens einen Wirbelsensorsignals, insb. unter Verwendung sowohl des wenigstens einen Wirbelsensorsignals als auch des Temperatursensorsignals, eine Mach-Zahl, Ma (Ma = u / c), für das am Staukörper vorbei strömende Fluids zu ermitteln, insb. nämliche Mach-Zahl repräsentierende Machzahl-Meßwerte (X_{Ma}) zu berechnen.

8. Meßsystem nach dem vorherigen Anspruch,
- wobei die Umformer-Elektronik (2) eingerichtet ist, für den Fall, daß die zweite Nutzkomponente im wenigstens einen Wirbelsensorsignal enthalten und zugleich die erste Nutzkomponente im wenigstens einen Wirbelsensorsignal nicht enthalten bzw. nicht ermittelt ist, den Machzahl-Meßwert (X_{Ma}) auf einen vorgegebenen Festwert, insb. nämlich auf Eins (Ma = 1), zu setzen bzw. nämlichen vorgegebenen Festwert als Machzahl-Meßwert (X_{Ma}) auszugeben; und/oder
- wobei die Umformer-Elektronik (2) eingerichtet ist, zumindest die Strömungsparameter-Meßwerte zweiter Art auch unter Verwendung eines oder mehrerer Machzahl-Meßwerte (X_{Ma}) zu berechnen.

9. Meßsystem nach einem der Ansprüche 3 bis 8, wobei die Umformer-Elektronik (2) eingerichtet ist, zumindest die Strömungsparameter-Meßwerte zweiter Art auch unter Verwendung eines Isentropenexponent, κ (κ = C_{P} / C_{V}), nämlich einer ein Verhältnis einer Wärmekapazität, Cₚ, des Fluids bei konstantem Druck zur einer Wärmekapazität, C_{V}, des Fluids bei konstantem Volumen repräsentierenden Kennzahl zu berechnen.

10. Meßsystem nach einem der Ansprüche 3 bis 9, weiters umfassend: einen, insb. stromabwärts des Staukörpers, Drucksensor, der eingerichtet ist, wenigstens ein Drucksensorsignal bereitzustellen, das einer Änderung eines, insb. statischen, Drucks des strömenden Fluids mit einer Änderung wenigstens eines Signalparameters folgt;
- wobei die Umformer-Elektronik (2) eingerichtet ist, das wenigstens eine Drucksensorsignal zu empfangen, und wobei die Umformer-Elektronik (2) eingerichtet ist, anhand des wenigstens einen Drucksensorsignals nämlichen Druck des Fluids repräsentierende Druck-Meßwerte (Xₚ) zu ermitteln;
- und wobei die Umformer-Elektronik (2) eingerichtet ist, zumindest die Strömungsparameter-Meßwerte zweiter Art auch unter Verwendung eines oder mehrerer Druck-Meßwerte zu berechnen.

11. Meßsystem nach einem der vorherigen Ansprüche, wobei die Umformer-Elektronik (2) eingerichtet ist, für den Fall, daß im wenigstens einen Wirbelsensorsignal weder die erste Nutzkomponente noch die zweite Nutzkomponente ermittelt ist,
-- eine Meldung zu generieren, insb. nämlich auszugeben, die signalisiert, daß momentan kein Fluid durch das Rohr hindurchströmt;
- und/oder weder Strömungsparameter-Meßwerte erster Art noch Strömungsparameter-Meßwerte zweiter Art von größer als Null bereitzustellen.

12. Meßsystem nach einem der vorherigen Ansprüche,
- wobei der Wirbelsensor einen, insb. membranartigen und/oder scheibenförmigen, Verformungskörper mit einer dem Lumen zugewandten ersten Oberfläche und einer gegenüberliegenden, insb. zur ersten Oberfläche zumindest teilweise parallelen, zweiten Oberfläche aufweist,
- und wobei der Wirbelsensor wenigstens ein oberhalb und/oder auf der zweiten Oberfläche des Verformungskörper angeordnetes, insb. nämlich am Verformungskörper angebrachtes und/oder in dessen Nähe positioniertes, Wandlerelement aufweist, das dafür eingerichtet ist, Bewegungen des Verformungskörpers, insb. von dessen zweiter Oberfläche, zu erfassen und in das Wirbelsensorsignal zu wandeln.

13. Meßsystem nach dem vorherigen Anspruch, wobei der Wirbelsensor eine sich ausgehend von der ersten Oberfläche des Verformungskörpers bis zu einem distalen Ende erstreckende, insb. plattenförmige oder keilförmige, Sensorfahne aufweist.

14. Meßsystem nach einem der vorherigen Ansprüche, weiters umfassend: ein mit der Umformer-Elektronik (2) gekoppeltes Anzeigeelement zur Ausgabe von von der Umformer-Elektronik (2) bereitgestellten Meßwerten (X_{M}) für den wenigstens einen Strömungsparameter und/oder von mittels der Umformer-Elektronik (2) generierten Meldungen.

## Claims

1. Measuring system designed to measure at least one flow parameter, particularly variable over time, particularly a flow velocity and/or a volume flow and/or a mass flow, of a fluid flowing through a pipe, wherein said fluid is particularly a gas or an aerosol, said measuring system comprising:
- a tube (3) that can be inserted into the course of said pipe and has an interior channel (3'), wherein said channel is designed to conduct the fluid flowing through the pipe or to have said fluid flow through it;
- a bluff body (4), particularly prismatic or cylindrical, arranged in the interior channel of the tube (3), wherein said body is designed to generate vortexes in the fluid flowing by, said vortexes having a shedding frequency, fᵥ (fᵥ ~ u), that depends on a current flow velocity, u, of said fluid, in such a way that a Karman vortex street is formed in the fluid flowing downstream from the bluff body;
- a vortex sensor (1), which is arranged particularly downstream from the bluff body or is integrated therein,
- - wherein said sensor has at least a mechanical resonance frequency, f_{R}, particularly the lowest and/or one that is always greater than the shedding frequency,
- - and which is designed to provide at least a vortex sensor signal (s1), particularly electrical or optical, that is variable over time,
- -- wherein said signal contains a first useful component (s1_{N1}), specifically a first spectral signal component representing the shedding frequency, fᵥ, - said component particularly having a signal level that is not below a signal noise threshold value predefined for this purpose - if a Karman vortex street is formed downstream from the bluff body in the flowing fluid,
- -- and wherein said signal contains a second useful component (s1_{N2}), specifically a second spectral signal component representing the at least one mechanical resonance frequency, f_{R}, of the vortex sensor - said component particularly having a signal level that is not below a signal noise threshold value predefined for this purpose - if fluid flows by the vortex sensor;
- as well as a transmitter electronics unit (2), particularly formed by at least a microprocessor, wherein said electronics unit is designed to evaluate the at least one vortex sensor signal and to determine measured values (X_{M}), particularly digital, for the at least one flow parameter;
- wherein the transmitter electronics unit (2) is designed
- - to receive the at least one vortex sensor signal
- - and to determine whether the first useful component and/or the second useful component is contained in the at least one vortex sensor signal;
- wherein, in the event that the first useful component is contained in the at least one vortex sensor signal, the transmitter electronics unit (2) is designed
- - to determine vortex frequency measured values, particularly digital, representing the shedding frequency using the first useful component of the at least one vortex sensor signal,
- - and to provide flow parameter measured values of the first type, for the at least one flow parameter, specifically measured values (X_{M}), particularly digital, calculated using one or more vortex frequency measured values;
- **characterized in that**
in the event that the first useful component is not contained/is not determined in the at least one vortex sensor signal, but the second useful component is contained or determined in the at least one vortex sensor signal, the transmitter electronics unit (2) is designed,
-- to not provide any flow parameter measured values of the first type
-- and/or to generate a control command that prevents the outputting of flow parameter measured values of the first type
-- and/or to generate, particularly to emit, a message that signals that the current flow velocity, u, of the fluid flowing by the bluff body is not less than a current flow velocity, c (c = u / Ma), of said fluid, particularly such that the current flow velocity of the fluid flowing by the bluff body is equal to its current flow velocity, and therefore corresponds to a Mach number, Ma (Ma = u / c), of one (Ma = 1).

2. Measuring system as claimed in the previous claim,
- wherein in the event that the first useful component is contained in the at least one vortex sensor signal, the transmitter electronics unit (2) is designed to generate a control command that causes the outputting of flow parameter measured values of the first type; and/or
- wherein the transmitter electronics unit (2) has a first signal filter, wherein said filter is designed to receive the vortex sensor signal at a signal input and to provide a first useful signal, particularly digital, at a filter output containing the first useful component of the vortex sensor signal, particularly always only containing the second useful component in an attenuated form or not at all, particularly to determine, using the first useful signal, whether the first useful component is contained in the at least one vortex sensor signal; and/or
- wherein the transmitter electronics unit (2) has a second signal filter, wherein said filter is designed to receive the vortex sensor signal at a signal input and to provide - at a filter output - a second useful signal, particularly digital, containing the second useful component of the vortex sensor signal, particularly always only containing the first useful component in an attenuated form or not at all, particularly to determine, using the second useful signal, whether the second useful component is contained in the at least one vortex sensor signal; and/or
- wherein the transmitter electronics unit (2) is designed to generate a discrete Fourier transformation (DFT) of the at least one vortex sensor signal and to determine, on the basis of the discrete Fourier transformation of the at least one vortex sensor signal, whether the first useful component and/or the second useful component is/are contained in the at least one vortex sensor signal; and/or
- wherein the transmitter electronics unit (2) is designed to calculate an autocorrelation (AKF) of the at least one vortex sensor signal and to determine, on the basis of said autocorrelation (AKF) of the at least one vortex sensor signal, whether the first useful component and/or la second useful component is/are contained in the at least one vortex sensor signal; and/or
- wherein the transmitter electronics unit (2) is designed to calculate the flow parameter measured values of the first type also using a Strouhal number, Sr (Sr ~ fᵥ / u), specifically an indicator representing a ratio of the shedding frequency, fᵥ, to the flow velocity, u, of the fluid flowing by the bluff body.

3. Measuring system as claimed in one of the previous claims, further comprising: a temperature sensor, arranged particularly downstream from the bluff body or in said bluff body, wherein said sensor is designed to provide at least a temperature sensor signal which follows a change in a temperature of the flowing fluid with a variation of at least one signal parameter,
- wherein the transmitter electronics unit (2) is designed to receive the at least one temperature sensor signal and to determine, using the at least one temperature sensor signal, temperature measured values (Xe) representing the temperature of the fluid;
- and wherein the transmitter electronics unit (2) is designed to provide flow parameter measured values of the second type, specifically measured values (XM) calculated for the at least one flow parameter using one or more temperature measured values, but without using a vortex frequency measured value.

4. Measuring system as claimed in the previous claim,
- wherein in the event that the second useful component is contained in the at least one vortex sensor signal and, at the same time, the first useful component is not contained in the at least one vortex sensor signal or is not determined, the transmitter electronics unit (2) is designed to generate a control command causing the outputting of flow parameter measured values of the second type; and/or
- wherein, in the event that the first useful component is contained in the at least one vortex sensor signal, the transmitter electronics unit (2) is designed to generate a control command preventing the outputting of flow parameter measured values of the second type; and/or
- wherein, in the event that the second useful component is contained in the at least one vortex sensor signal and, at the same time, the first useful component is not contained or is not determined in the at least one vortex sensor signal, the transmitter electronics unit (2) is designed to output flow parameter measured values of the second type; and/or
- wherein, in the event that the second useful component is contained in the at least one vortex sensor signal and, at the same time, the first useful component is not contained or is not determined in the at least one vortex sensor signal, the transmitter electronics unit (2) is designed to use an equivalence frequency calculated using the temperature, specifically a frequency corresponding to the sonic velocity, c, to determine measured values (X_{M}) for the at least one flow parameter; and/or
- wherein, in the event that the first useful component is contained in the at least one vortex sensor signal, the transmitter electronics unit (2) is designed to not output any flow parameter measured values of the second type.

5. Measuring system as claimed in one of the Claims 3 to 4,
wherein the transmitter electronics unit (2) is designed to determine the sonic velocity, c (c = u / Ma), of the fluid flowing by the bluff body, using both the at least one vortex sensor signal and the at least one temperature sensor signal, particularly to calculate sonic velocity measured values (X_{c}) representing said sonic velocity.

6. Measuring system as claimed in the previous claim, wherein the transmitter electronics unit (2) is designed to calculate at least the flow parameter measured values of the second type also using one or more sonic velocity measured values (X_{c}), particularly to output sonic velocity measured values (X_{c}) as flow parameter measured values of the second type.

7. Measuring system as claimed in one of the Claims 3 to 6, wherein the transmitter electronics unit (2) is designed to determine, using the at least one vortex sensor signal, particularly using both the at least one vortex sensor signal and the temperature sensor signal, a Mach number, Ma (Ma = u / c), for the fluid flowing by the bluff body, particularly to calculate Mach number measured values (X_{Ma}) representing said Mach number.

8. Measuring system as claimed in the previous claim,
- wherein, in the event that the second useful component is contained in the at least one vortex sensor signal and, at the same time, the first useful component is not contained in the at least one vortex sensor signal or is not determined, the transmitter electronics unit (2) is designed to set the Mach number measured value (X_{Ma}) to a predefined fixed value, particularly to one (Ma = 1), or to output said predefined fixed value as the Mach number measured value (X_{Ma}); and/or
- wherein the transmitter electronics unit (2) is designed to calculate at least the flow parameter measured values of the second type also using one or more Mach number measured values (X_{Ma}).

9. Measuring system as claimed in one of the Claims 3 to 8, wherein the transmitter electronics unit (2) is designed to calculate at least flow parameter measured values of the second type also using an isentropic exponent, k (k = Cₚ / Cᵥ), specifically an indicator representing a ratio of a thermal capacity, Cₚ, of the fluid at constant pressure to a thermal capacity, Cᵥ, of the fluid at a constant volume.

10. Measuring system as claimed in one of the Claims 3 to 9, further comprising: a pressure sensor, particularly situated downstream from the bluff body, wherein said sensor is designed to provide at least a pressure sensor signal which follows a change of a pressure, particularly static, of the flowing fluid with a change of at least a signal parameter;
- wherein the transmitter electronics unit (2) is designed to receive the at least one pressure sensor signal, and the transmitter electronics unit (2) is designed to determine, using the at least one pressure sensor signal, pressure measured values (Xₚ) representing the pressure of the fluid;
- and wherein the transmitter electronics unit (2) is designed to calculate at least the flow parameter measured values of the second type also using one or more pressure measured values.

11. Measuring system as claimed in one of the previous claims, wherein, in the event that neither the first useful component nor the second useful component is determined in the at least one vortex sensor signal, the transmitter electronics unit (2) is designed
-- to generate, particularly output, a message that signals that currently no fluid flows through the tube;
- and/or to neither provide flow parameter measured values of either the first type nor flow parameter measured values of the second type that are greater than zero.

12. Measuring system as claimed in one of the previous claims,
- wherein the vortex sensor has a deformation body, particularly in the form of a membrane and/or disc, with a first surface facing towards the interior channel and a second surface that is opposite, particularly at least partially parallel to the first surface,
- and wherein the vortex sensor has at least a transducer element arranged above and/or on the second surface of the deformation body, particularly mounted on the deformation body and/or positioned near it, wherein said element is designed to capture movements of the deformation body, particularly of its second surface, and to convert them to the vortex sensor signal.

13. Measuring system as claimed in the previous claim, wherein the vortex sensor has a sensor tongue, particularly in the form of a plate or wedge, extending from the first surface of the deformation body to the distal end.

14. Measuring system as claimed in one of the previous claims, further comprising: a display element coupled with the transmitter electronics unit (2), said display element serving to output measured values (X_{M}) provided by the transmitter electronics unit (2) for the at least one flow parameter and/or messages generated by the transmitter electronics unit (2).

## Revendications

1. Système de mesure destiné à la mesure d'au moins un paramètre d'écoulement, notamment variable dans le temps, notamment une vitesse d'écoulement et/ou un débit volumique et/ou un débit massique, d'un fluide s'écoulant dans une conduite, lequel fluide est notamment un gaz ou un aérosol, lequel système de mesure comprend :
- un tube (3) pouvant être inséré dans le parcours de ladite conduite et comportant une canal intérieur (3'), lequel canal est conçu pour guider le fluide s'écoulant dans la conduite ou pour être traversé par ledit fluide ;
- un corps de retenue (4), notamment prismatique ou cylindrique, disposé dans le canal intérieur du tube (3), lequel corps est conçu pour générer dans le fluide s'écoulant devant lui des tourbillons avec une fréquence de détachement, fᵥ (fᵥ ~ u), dépendant d'une vitesse d'écoulement momentanée, u, dudit fluide, de telle sorte que se forme, en aval du corps de retenue, une allée de tourbillons selon Karman dans le fluide en écoulement ;
- un capteur vortex (1), lequel est disposé notamment en aval du corps de retenue ou intégré dans celui-ci,
-- lequel capteur présente au moins une fréquence de résonance mécanique, f_{R}, notamment la plus basse et/ou toujours supérieure à la fréquence de détachement,
-- et lequel capteur est conçu pour fournir au moins un signal de capteur vortex (s1), notamment électrique ou optique, variable dans le temps,
--- lequel signal contient une première composante utile (s1_{N1}), à savoir une première composante spectrale de signal représentant la fréquence de détachement, fᵥ, laquelle composante présente notamment un niveau de signal qui n'est pas inférieur à une valeur seuil prédéfinie à cet effet pour le bruit de signal, dans le cas où une allée de tourbillons de Karman est formée en aval du corps de retenue dans le fluide en écoulement,
--- et lequel signal contient une deuxième composante utile (s1_{N2}), à savoir une deuxième composante spectrale de signal représentant l'au moins une fréquence de résonance mécanique, f_{R}, du capteur vortex, laquelle composante présente notamment un niveau de signal qui n'est pas inférieur à une valeur seuil prédéfinie à cet effet pour le bruit de signal, dans le cas où un fluide passe devant le capteur à tourbillon ;
- ainsi qu'une électronique de transmetteur (2), notamment constituée au moyen d'au moins un microprocesseur, laquelle électronique est destinée à évaluer l'au moins un signal de capteur vortex et à déterminer des valeurs mesurées (X_{M}), notamment numériques, pour l'au moins un paramètre d'écoulement ;
- l'électronique de transmetteur (2) étant conçue
-- pour recevoir l'au moins un signal de capteur vortex
-- et pour déterminer si la première composante utile et/ou la deuxième composante utile est contenue dans l'au moins un signal de capteur vortex ;
- l'électronique de transmetteur (2) étant conçue, dans le cas où la première composante utile est contenue dans l'au moins un signal de capteur vortex,
-- aussi bien pour déterminer, à l'aide de la première composante utile de l'au moins un signal de capteur vortex, des valeurs mesurées de fréquence vortex, notamment numériques, représentant la fréquence de détachement,
-- que pour mettre à disposition, pour l'au moins un paramètre d'écoulement, des valeurs mesurées de paramètre d'écoulement de premier type, à savoir des valeurs mesurées (X_{M}), notamment numériques, calculées en utilisant une ou plusieurs valeurs mesurées de fréquence vortex ;
- **caractérisé en ce que**
l'électronique de transmetteur (2) est conçue - dans le cas où la première composante utile n'est pas contenue ou n'est pas déterminée dans l'au moins un signal de capteur vortex, mais qu'en même temps la deuxième composante utile est contenue ou déterminée dans l'au moins un signal de capteur vortex,
-- pour ne pas mettre à disposition des valeurs mesurées de paramètre d'écoulement de premier type
-- et/ou pour générer une instruction de commande empêchant une sortie de valeurs mesurées de paramètre d'écoulement de premier type
-- et/ou pour générer, notamment pour émettre, un message qui signale que la vitesse d'écoulement instantanée, u, du fluide s'écoulant devant le corps de retenue n'est pas inférieure à une vitesse acoustique instantanée, c (c = u / Ma), dudit fluide, notamment de telle sorte que la vitesse d'écoulement instantanée du fluide s'écoulant devant le corps de retenue soit égale à sa vitesse acoustique instantanée, c'est-à-dire qu'elle corresponde à un nombre de Mach, Ma (Ma = u / c), de un (Ma = 1).

2. Système de mesure selon la revendication précédente,
- pour lequel l'électronique de transmetteur (2) est conçue pour générer, dans le cas où la première composante utile est contenue dans l'au moins un signal de capteur vortex, une instruction de commande provoquant une sortie de valeurs mesurées de paramètre d'écoulement de premier type ; et/ou
- pour lequel l'électronique de transmetteur (2) comporte un premier filtre de signal, lequel filtre est conçu pour recevoir à une entrée de signal le signal de capteur vortex et pour mettre à disposition à une sortie de filtre un premier signal utile, notamment numérique, contenant la première composante utile du signal de capteur vortex, notamment ne contenant toujours la deuxième composante utile que de manière atténuée ou pas du tout, notamment de manière à déterminer, en utilisant le premier signal utile, si la première composante utile est contenue dans l'au moins un signal de capteur vortex ; et/ou
- pour lequel l'électronique de transmetteur (2) comporte un deuxième filtre de signal, lequel filtre est conçu pour recevoir à une entrée de signal le signal de capteur vortex et pour mettre à disposition à une sortie de filtre un deuxième signal utile, notamment numérique, contenant la deuxième composante utile du signal de capteur vortex, notamment ne contenant toujours la première composante utile que de manière atténuée ou pas du tout, notamment de manière à déterminer, en utilisant le deuxième signal utile, si la deuxième composante utile est contenue dans l'au moins un signal de capteur vortex ; et/ou
- pour lequel l'électronique de transmetteur (2) est conçue pour générer une transformation de Fourier discrète (DFT) de l'au moins un signal de capteur vortex et pour déterminer, sur la base de la transformation de Fourier discrète de l'au moins un signal de capteur vortex, si la première composante utile et/ou la deuxième composante utile est/sont contenue(s) dans l'au moins un signal de capteur vortex ; et/ou
- pour lequel l'électronique de transmetteur (2) est conçue pour calculer une autocorrélation (AKF) de l'au moins un signal de capteur vortex et pour déterminer, sur la base de cette autocorrélation (AKF) de l'au moins un signal de capteur vortex, si la première composante utile et/ou la deuxième composante utile est/sont contenue(s) dans l'au moins un signal de capteur vortex ; et/ou
- pour lequel l'électronique de transmetteur (2) est conçue pour calculer les valeurs mesurées de paramètre d'écoulement de premier type également en utilisant un nombre de Strouhal, Sr (Sr ~ fᵥ / u), à savoir un indice représentant un rapport entre la fréquence de détachement, fᵥ, et la vitesse d'écoulement, u, du fluide s'écoulant devant le corps de retenue.

3. Système de mesure selon l'une des revendications précédentes, comprenant en outre : un capteur de température, disposé notamment en aval du corps de retenue ou dans celui-ci, lequel capteur est conçu pour fournir au moins un signal de capteur de température qui suit une variation d'une température du fluide en écoulement avec une variation d'au moins un paramètre de signal,
- pour lequel l'électronique de transmetteur (2) est conçue pour recevoir l'au moins un signal de capteur de température et pour déterminer, à l'aide de l'au moins un signal de capteur de température, des valeurs mesurées de température (Xe) représentant la température du fluide ;
- et pour lequel l'électronique de transmetteur (2) est conçue pour fournir des valeurs mesurées de paramètre d'écoulement de deuxième type, à savoir des valeurs mesurées (XM) calculées pour l'au moins un paramètre d'écoulement en utilisant une ou plusieurs valeurs mesurées de température, mais sans utiliser de valeur mesurée de fréquence vortex.

4. Système de mesure selon la revendication précédente,
- pour lequel l'électronique de transmetteur (2) est conçue - dans le cas où la deuxième composante utile est contenue dans l'au moins un signal de capteur vortex et où, en même temps, la première composante utile n'est pas contenue dans l'au moins un signal de capteur vortex ou n'est pas déterminée - pour générer une instruction de commande provoquant une sortie de valeurs mesurées de paramètre d'écoulement de deuxième type ; et/ou
- pour lequel l'électronique de transmetteur (2) est conçue - dans le cas où la première composante utile est contenue dans l'au moins un signal de capteur vortex - pour générer une instruction de commande empêchant une sortie de valeurs mesurées de paramètre d'écoulement de deuxième type ; et/ou
- pour lequel l'électronique de transmetteur (2) est conçue - dans le cas où la deuxième composante utile est contenue dans l'au moins un signal de capteur vortex et où, en même temps, la première composante utile n'est pas contenue ou n'est pas déterminée dans l'au moins un signal de capteur vortex - pour émettre des valeurs mesurées de paramètre d'écoulement de deuxième type ; et/ou
- pour lequel l'électronique de transmetteur (2) est conçue - dans le cas où la deuxième composante utile est contenue dans l'au moins un signal de capteur vortex et où en même temps la première composante utile n'est pas contenue ou n'est pas déterminée dans l'au moins un signal de capteur vortex - pour utiliser une fréquence équivalente calculée à l'aide de la température, à savoir une fréquence correspondant à la vitesse du son, c, pour déterminer des valeurs mesurées (X_{M}) pour l'au moins un paramètre d'écoulement ; et/ou
- pour lequel l'électronique de transmetteur (2) est conçue - dans le cas où la première composante utile est contenue dans l'au moins un signal de capteur vortex - pour ne pas émettre de valeurs mesurées de paramètre d'écoulement de deuxième type.

5. Système de mesure selon l'une des revendications 3 à 4,
pour lequel l'électronique de transmetteur (2) est conçue pour déterminer la vitesse du son, c (c = u / Ma), du fluide s'écoulant devant le corps de retenue, en utilisant aussi bien l'au moins un signal de capteur vortex que l'au moins un signal de capteur de température, notamment pour calculer des valeurs mesurées de vitesse du son (X_{c}) représentant ladite vitesse du son.

6. Système de mesure selon la revendication précédente, pour lequel l'électronique de transmetteur (2) est conçue pour calculer au moins les valeurs mesurées de paramètre d'écoulement de deuxième type également en utilisant une ou plusieurs valeurs mesurées de vitesse du son (X_{c}), notamment pour délivrer des valeurs mesurées de vitesse du son (X_{c}) en tant que valeurs mesurées de paramètre d'écoulement de deuxième type.

7. Système de mesure selon l'une des revendications 3 à 6, pour lequel l'électronique de transmetteur (2) est conçue pour déterminer, en utilisant l'au moins un signal de capteur vortex, notamment en utilisant aussi bien l'au moins un signal de capteur vortex que le signal de capteur de température, un nombre de Mach, Ma (Ma = u / c), pour le fluide s'écoulant devant le corps de retenue, notamment pour calculer des valeurs mesurées de nombre de Mach (X_{Ma}) représentant ledit nombre de Mach.

8. Système de mesure selon la revendication précédente,
- pour lequel l'électronique de transmetteur (2) est conçue - dans le cas où la deuxième composante utile est contenue dans l'au moins un signal de capteur vortex et où, en même temps, la première composante utile n'est pas contenue dans l'au moins un signal de capteur vortex ou n'est pas déterminée - pour régler la valeur mesurée du nombre de Mach (X_{Ma}) sur une valeur fixe prédéfinie, notamment sur un (Ma = 1), ou à émettre la même valeur fixe prédéfinie comme valeur mesurée du nombre de Mach (X_{Ma}) ; et/ou
- l'électronique de transmetteur (2) étant conçue pour calculer au moins les valeurs mesurées des paramètres d'écoulement de deuxième type également en utilisant une ou plusieurs valeurs mesurées du nombre de Mach (X_{Ma}).

9. Système de mesure selon l'une des revendications 3 à 8, pour lequel l'électronique de transmetteur (2) est conçue pour calculer au moins les valeurs mesurées de paramètre d'écoulement de deuxième type également en utilisant un exposant isentropique, k (k = Cₚ / Cᵥ), à savoir un indice représentant un rapport entre une capacité thermique, Cₚ, du fluide à pression constante et une capacité thermique, Cᵥ, du fluide à volume constant.

10. Système de mesure selon l'une des revendications 3 à 9, comprenant en outre :
un capteur de pression, notamment situé en aval du corps de retenue, lequel capteur est conçu pour fournir au moins un signal de capteur de pression qui suit une variation d'une pression, notamment statique, du fluide en écoulement avec une variation d'au moins un paramètre de signal ;
- l'électronique de transmetteur (2) étant conçue pour recevoir l'au moins un signal de capteur de pression, et l'électronique de transmetteur (2) étant conçue pour déterminer, à l'aide de l'au moins un signal de capteur de pression, des valeurs mesurées de pression (Xₚ) représentant la pression du fluide ;
- et l'électronique de transmetteur (2) étant conçue pour calculer au moins les valeurs mesurées de paramètre d'écoulement de deuxième type également en utilisant une ou plusieurs valeurs mesurées de pression.

11. Système de mesure selon l'une des revendications précédentes, pour lequel l'électronique de transmetteur (2) est conçue, dans le cas où ni la première composante utile ni la deuxième composante utile n'est déterminée dans l'au moins un signal de capteur vortex,
-- pour générer, notamment émettre, un message qui signale qu'aucun fluide ne s'écoule actuellement à travers le tube ;
- et/ou pour ne pas fournir des valeurs mesurées de paramètre d'écoulement de premier type ni des valeurs mesurées de paramètre d'écoulement de deuxième type qui sont supérieures à zéro.

12. Système de mesure selon l'une des revendications précédentes,
- pour lequel le capteur vortex présente un corps déformable, notamment en forme de membrane et/ou de disque, avec une première surface tournée vers le canal intérieur et une deuxième surface opposée, notamment au moins partiellement parallèle à la première surface,
- et pour lequel le capteur vortex présente au moins un élément transducteur disposé au-dessus et/ou sur la deuxième surface du corps déformable, notamment monté sur le corps déformable et/ou positionné à proximité de celui-ci, lequel élément est conçu pour détecter des mouvements du corps déformable, notamment de sa deuxième surface, et pour les convertir en le signal du capteur vortex.

13. Système de mesure selon la revendication précédente, pour lequel le capteur vortex présente une languette de capteur, notamment en forme de plaque ou de coin, laquelle languette s'étend de la première surface du corps de déformation jusqu'à une extrémité distale.

14. Système de mesure selon l'une des revendications précédentes, comprenant en outre : un élément d'affichage couplé à l'électronique de transmetteur (2), lequel élément d'affichage sert à la sortie de valeurs mesurées (X_{M}) mises à disposition par l'électronique de transmetteur (2) pour l'au moins un paramètre d'écoulement et/ou de messages générés au moyen de l'électronique de transmetteur (2).
